(19) Europäisches Patentamt
European Patent Office
Office européen des brevets

(11) **EP 4 682 779 A1**

(12) **EUROPEAN PATENT APPLICATION**

(43) Date of publication:
**21.01.2026  Bulletin 2026/04**

(21) Application number: **25182509.7**

(22) Date of filing: **12.06.2025**

(51) International Patent Classification (IPC):
**G06N 10/60** *(2022.01)*   **G06N 10/20** *(2022.01)*
**G06N 7/01** *(2023.01)*   **G06N 5/01** *(2023.01)*

(52) Cooperative Patent Classification (CPC):
**G06N 10/20; G06N 5/01; G06N 7/01; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.07.2024  JP 2024113693**

(71) Applicant: **Fujitsu Limited
Kawasaki-shi, Kanagawa 211-8588 (JP)**

(72) Inventor: **LIU, Yu
Kawasaki-shi, 211-8588 (JP)**

(74) Representative: **Haseltine Lake Kempner LLP
Cheapside House
138 Cheapside
London EC2V 6BJ (GB)**

(54) **INFORMATION PROCESSING PROGRAM, INFORMATION PROCESSING METHOD, INFORMATION PROCESSING DEVICE**

(57)    An information processing method executed by a computer includes: calculating a first solution to a combinatorial optimization problem, based on an Ising model corresponding to said problem; determining a value of a parameter of a quantum approximate optimization algorithm (QAOA) for said problem, to maximize a probability that a quantum state of a first quantum circuit by the QAOA becomes the first solution; and calculating a second solution to said problem, based on the first quantum circuit having the value of the parameter set therein, the value being determined by using a second quantum circuit by quantum amplitude estimation and thereby repeatedly updating the value according to a result of measuring the probability based on a phase that defines an amplitude identifying the probability, the second quantum circuit including a partial circuit having an auxiliary quantum bit whose quantum state is 1 when the quantum state of the first quantum circuit becomes the first solution.

FIG.1

EP 4 682 779 A1

**Description**

FIELD OF THE INVENTION

Embodiments discussed herein related to a recording medium/information processing program, an information processing method, and an information processing device.

BACKGROUND OF THE INVENTION

Conventionally, an existing quantum approximate optimization algorithm solves combinatorial optimization problems. For example, in the quantum approximate optimization algorithm, the combinatorial optimization problem is solved by repeating a series of processes including: "identifying a quantum state of a quantum circuit; identifying energy corresponding to the identified quantum state; and changing the parameter of the quantum circuit based on the identified energy".

As a prior art, for example, there is a technique that maps a cost function associated with a combinatorial optimization problem to an optimization problem on an allowed quantum state. Also, for example, there is a technique that processes an optimization problem of a radiation therapy plan with a machine learning model to estimate one or more optimization variables. Also, for example, there is a technique that uses perturbations such as noise to improve the speed and accuracy of quantum annealing. Also, for example, there is a technique that uses virtualization to facilitate network routing. For examples, refer to Published Japanese-Translation of PCT Application, Publication No. 2021-504805, Published Japanese-Translation of PCT Application, Publication No. 2022-542826, U.S. Patent Application Publication No. 2020/0090071, and U.S. Patent Application Publication No. 2012/0020352.

SUMMARY OF THE INVENTION

It is an object in one aspect of the embodiments to at least solve the above problems in the conventional technologies.

According to an aspect of an embodiment, an information processing program for causing a computer to execute a process, the process includes: calculating a first solution to a combinatorial optimization problem, based on an Ising model corresponding to the combinatorial optimization problem; determining a value of a parameter of a quantum approximate optimization algorithm for the combinatorial optimization problem, the value of the parameter being determined so as to maximize a probability that a quantum state of a first quantum circuit by the quantum approximate optimization algorithm becomes the calculated first solution; and calculating a second solution to the combinatorial optimization problem, based on the first quantum circuit in which the determined value of the parameter is set. The determining includes determining the value of the parameter by repeating a process including using a second quantum circuit by quantum amplitude estimation and thereby updating the value of the parameter according to a result of measuring the probability based on a phase that defines an amplitude identifying the probability, the second quantum circuit including a partial circuit having an auxiliary quantum bit whose quantum state is 1 when the quantum state of the first quantum circuit becomes the first solution.

BRIEF DESCRIPTION OF DRAWINGS

Fig. 1 is an explanatory view depicting one example of an information processing method according to an embodiment.
Fig. 2 is an explanatory view depicting an example of an information processing system.
Fig. 3 is a block diagram depicting an example of a hardware configuration of an information processing device 100.
Fig. 4 is a block diagram depicting an example of a functional configuration of the information processing device 100 in a first example.
Fig. 5 is an explanatory view depicting an example of operation of the information processing device 100 in the first example.
Fig. 6 is an explanatory view depicting an example of a first quantum circuit 600.
Fig. 7 is an explanatory view depicting an example of determining hyperparameters $(\gamma^*, \beta^*)$.
Fig. 8 is an explanatory view depicting an example of a state preparing circuit 720.
Fig. 9A is an explanatory view depicting an effect of the information processing device 100.
Fig. 9B is an explanatory view depicting an effect of the information processing device 100.
Fig. 9C is an explanatory view depicting an effect of the information processing device 100.

Fig. 10 is a flowchart depicting an example of an overall processing procedure in the first example.

Fig. 11 is a flowchart depicting an example of a procedure of a first determination process in the first example.

Fig. 12 is a flowchart depicting an example of a procedure of a measurement process.

Fig. 13 is a flowchart depicting an example of a procedure of a second determination process in the first example.

Fig. 14 is an explanatory view depicting the operation flow of the information processing device 100 in a second example.

Fig. 15 is a block diagram depicting an example of a functional configuration of the information processing device 100 in the second example.

Fig. 16 is an explanatory view depicting an example of the operation of the information processing device 100 in the second example.

Fig. 17 is a flowchart depicting an example of the procedure of the overall processing in the second example.

Fig. 18 is a flowchart depicting an example of the procedure of the first determination process in the second example.

Fig. 19 is a flowchart depicting an example of the procedure of the second determination process in the second example.

Fig. 20 is a flowchart depicting an example of a procedure of a third determination process in the second example.

DESCRIPTION OF THE INVENTION

First, problems associated with the conventional techniques are discussed. With conventional techniques, it is difficult to efficiently solve combinatorial optimization problems. For example, the time required to solve a combinatorial optimization problem tends to increase.

Embodiments of an information processing program, an information processing method, and an information processing device according to the present invention are described in detail with reference to the accompanying drawings.

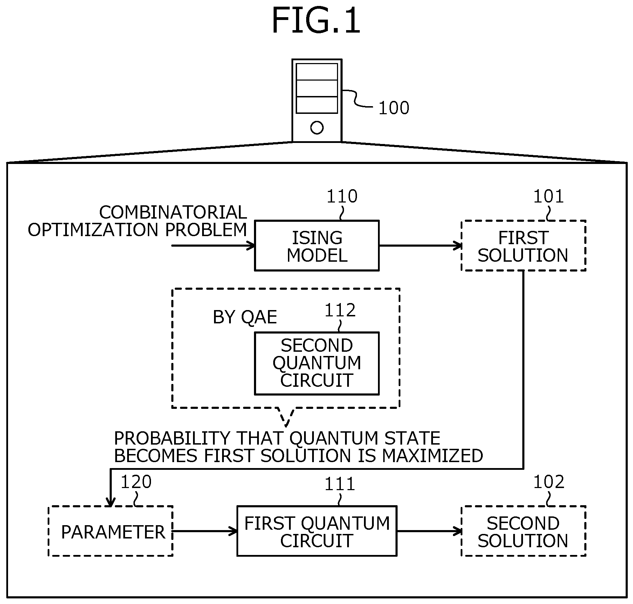

Fig. 1 is an explanatory view depicting one example of an information processing method according to an embodiment. An information processing device 100 is a computer for facilitating solution of a combinatorial optimization problem. The information processing device 100 is, for example, a server or a personal computer (PC).

The combinatorial optimization problem is a problem of finding a solution for a combination of variables so as to optimize the value of an objective function under constraint conditions. Conventionally, examples of methods for solving combinatorial optimization problems include, for example, the simulated annealing (SA) method and the quantum approximate optimization algorithm. In the following description, the quantum approximate optimization algorithm may be referred to as "QAOA".

The SA method is a method for solving a combinatorial optimization problem by repeatedly searching for a solution of a combination of variables while adjusting the range for searching for a solution of the combination of variables, for example, by using thermal noise. The SA method is also called, for example, simulated annealing. The QAOA is a method based on, for example, the variational quantum algorithm. The variational quantum algorithm is a method in which the Rayleigh-Ritz variation method using the Schrödinger equation is applied to a quantum circuit.

The QAOA is a method for solving a combinatorial optimization problem by, for example, using a quantum circuit representing a quantum state corresponding to a combination of variables. For example, the QAOA solves a combinatorial optimization problem by repeating a series of processes of "identifying a quantum state of a quantum circuit, identifying an energy corresponding to the specified quantum state, and changing a parameter of the quantum circuit based on the specified energy". The QAOA considers the distribution of the energy of all classical states, for example, by a quantum superposition state. For example, the QAOA utilizes the Grid method, the Broyden Fletcher Goldfarb Shanno (BFGS) method, the quadratic approximation method, the Powell method, or Bayesian estimation when changing the parameters of a quantum circuit.

As for the QAOA, for example, refer to Farhi, Edward, Jeffrey Goldstone, and Sam Gutmann. "A quantum approximate optimization algorithm." arXiv preprint arXiv:1411.4028 (2014). For the Grid method, for example, refer to Streif, Michael, and Martin Leib. "Forbidden subspaces for level-1 quantum approximate optimization algorithm and instantaneous quantum polynomial circuits." Physical Review A 102.4 (2020): 042416. For the BFGS method, for example, refer to Streif, Michael, and Martin Leib. "Training the quantum approximate optimization algorithm without access to a quantum processing unit." Quantum Science and Technology 5.3 (2020): 034008. For the quadratic approximation method, for example, refer to Shaydulin, Ruslan, and Yuri Alexeev. "Evaluating quantum approximate optimization algorithm: A case study." 2019 tenth international green and sustainable computing conference (IGSC). IEEE, 2019. For the Bayesian estimation, for example, refer to Tibaldi, Simone, et al. "Bayesian Optimization for QAOA." arXiv preprint arXiv:2209.03824 (2022).

However, it has been difficult to efficiently solve combinatorial optimization problems using conventional methods. For example, the time required to solve a combinatorial optimization problem tends to increase. For example, in the SA method, the farther the initial value is from the optimal solution, the more the time required to solve the combinatorial optimization problem and find the optimal solution tends to increase. The quantum annealing method also has a similar tendency. For this tendency, refer to, for example, Katzgraber, Helmut G., et al. "Seeking quantum speedup through spin glasses: The good, the bad, and the ugly." Physical Review X 5.3 (2015): 031026.

For example, in the QAOA, the energy and the parameters of the quantum circuit may have a non-convex relationship, and the time required to appropriately change the parameters tends to increase, making it difficult to find optimal parameters. For this reason, even in the QAOA, the time required to solve a combinatorial optimization problem easily increases.

On the other hand, a method can be considered in which an Ising machine is used to extend the QAOA to shorten the time required to solve a combinatorial optimization problem. In this method, a series of processes is repeated: "calculating a first solution to a combinatorial optimization problem using an Ising machine, determining the values of the parameters of the quantum circuit so that the probability that the quantum state of the quantum circuit becomes the first solution is maximized, and calculating a second solution to the combinatorial optimization problem". In this method, for example, when the values of the parameters of the quantum circuit are determined, the probability that the quantum state of the quantum circuit becomes the first solution is measured. The measurement is implemented, for example, by a Hadamard test. In the Hadamard test, the measurement is performed, for example, by sampling with the number of shots=n.

Even with this method, it may be difficult to efficiently solve a combinatorial optimization problem. For example, the time required to solve a combinatorial optimization problem easily increases. Here, when measuring the probability that the quantum state of the quantum circuit becomes the first solution, the measurement error is considered to be on the order of 1/n. For this reason, in order to suppress the measurement error, it is desirable to increase the number of shots. On the other hand, there is a tendency for the time required for measurement to increase as the number of shots increases. Thus, when the measurement error is suppressed, the time required for measurement easily increases, and it is considered that the time required for solving a combinatorial optimization problem easily increases.

Thus, in this embodiment, an information processing method that can facilitate solving a combinatorial optimization problem is described. For example, this information processing method utilizes quantum amplitude estimation to extend the QAOA, making it easier to solve a combinatorial optimization problem. In the following description, quantum amplitude estimation may be referred to as "QAE". According to the information processing method, it is possible to reduce the time required to solve a combinatorial optimization problem.

In Fig. 1, the information processing device 100 obtains a combinatorial optimization problem. The information processing device 100 obtains, for example, an objective function min(E=C(z)) of the combinatorial optimization problem. For example, z is a state and represents a combination of variables. For example, E is energy. Here, it is desired to obtain a state z that minimizes E=C(z), which is a solution to the combinatorial optimization problem.

The information processing device 100 has, for example, a quantum processing unit (QPU). The information processing device 100 has, for example, an Ising machine. The information processing device 100, for example, sets an Ising model 110 corresponding to the obtained combinatorial optimization problem. The information processing device 100, for example, sets a first quantum circuit 111 by the QAOA corresponding to the combinatorial optimization problem, which represents a quantum state corresponding to a state z. The first quantum circuit 111 is, for example, QAOA Anzatz. The quantum state, for example, represents each possible value of the state z probabilistically.

(1-1) The information processing device 100 calculates a first solution 101 of the combinatorial optimization problem, based on the set Ising model 110. The information processing device 100, for example, uses an Ising machine of a digital annealer to calculate a state $z_0$, based on the Ising model 110 and a set initial value, the state $z_0$ becoming the first solution 101 of the combinatorial optimization problem. The initial value is, for example, set in advance by the user. The initial value is, for example, the value of the state z.

(1-2) The information processing device 100 determines the value of a parameter 120 of the first quantum circuit 111 so as to maximize the probability that the quantum state of the set first quantum circuit 111 becomes the calculated first solution 101. The information processing device 100 sets a second quantum circuit 112 by, for example, the QAE. The second quantum circuit 112 includes, for example, a partial circuit. The partial circuit has, for example, an auxiliary quantum bit. When the quantum state of the first quantum circuit 111 becomes the first solution 101, the quantum state of the auxiliary quantum bit becomes 1. The information processing device 100 determines the value of the parameter 120 by, for example, repeating a process of updating the value of the parameter 120 of the first quantum circuit 111, using the second quantum circuit 112 by the QPU.

In this case, in the updating process, the information processing device 100 first measures the probability that the quantum state of the first quantum circuit 111 will be the first solution 101, based on a phase that defines an amplitude that identifies the probability that the quantum state of the first quantum circuit 111 will be the first solution 101. In the updating process, the information processing device 100 then updates the value of the parameter 120 of the first quantum circuit 111 according to the result of measuring the probability, based on the result of measuring the probability.

(1-3) The information processing device 100 calculates a second solution 102 of the combinatorial optimization problem, based on the first quantum circuit 111 in which the determined value of the parameter 120 is set. The information processing device 100 performs n-shot sampling of the quantum state by, for example, the QPU, and calculates a state $z_1$

that will be the second solution 102. For example, the information processing device 100 repeats, n times, the Z-direction projection measurement of the quantum state represented by the first quantum circuit 111 to which the determined parameter 120 value is set to obtain a state z and based on the distribution of the obtained state z, calculates a state $z_1$ that is the second solution 102.

This enables the information processing device 100 to make a combinatorial optimization problems easier to solve. The information processing device 100 can appropriately set the parameter 120 of the first quantum circuit 111 based on the first solution 101 calculated using the Ising model 110 and can reduce the time required to perform the QAOA. The information processing device 100 can obtain a state $z_1$ that is relatively close to the optimal solution and that is a preferable solution.

Furthermore, the information processing device 100 can measure the probability that the quantum state of the first quantum circuit 111 becomes the first solution 101 by utilizing the QAE without relying on the Hadamard test. Here, according to the QAE, the measurement error is considered to be on the order of $1/n^2$. n is the number of shots. Thus, the information processing device 100 can, for example, reduce the time required for measurement while suppressing the measurement error, and can reduce the time required for performing the QAOA.

(1-4) The information processing device 100 may set the calculated state $z_1$ as a new initial value and repeat the series of processes depicted in (1-1), (1-2), and (1-3) until the convergence condition is satisfied. The convergence condition is, for example, that the series of processes has been performed a predetermined number of times. This enables the information processing device 100 to solve the combinatorial optimization problem with high accuracy. The information processing device 100 can obtain a state z1 that is closer to the optimal solution and that is a preferable solution.

While a case has been described where the function of the information processing device 100 is implemented by a single computer, configuration is not limited hereto. For example, the function of the information processing device 100 may be implemented by cooperation of multiple computers. For example, the function of the information processing device 100 may be implemented on a cloud.

While a case has been described where the information processing device 100 has an Ising machine, the present invention is not limited hereto. The information processing device 100 may control another computer having an Ising machine to calculate a first solution 101 of a combinatorial optimization problem and may obtain the first solution 101 from the other computer.

The case has been described where the information processing device 100 has the QPU, but the present invention is not limited thereto. The information processing device 100 may control another computer having the QPU to calculate the second solution 102 of a combinatorial optimization problem and may obtain the second solution 102 from the other computer.

While a case has been described where the information processing device 100 solves a combinatorial optimization problem by a first method of performing the above series of processes, the present invention is not limited hereto. For example, the information processing device 100 may solve a combinatorial optimization problem by a second method, which is the above first method that has been improved. For example, the second method is a method in which the first method is combined with a process of determining a first value of the parameter 120 so that the energy corresponding to the quantum state of the first quantum circuit 111 is minimized.

For example, the second method calculates the first solution 101 and determines the first value of the parameter 120, and then determines a second value of the parameter 120 from the determined first value so that the probability that the quantum state of the first quantum circuit 111 becomes the first solution 101 is maximized. Here, it is preferable that the second method does not rely on the Hadamard test but rather utilizes the QAE as in the first method to measure the probability that the quantum state of the first quantum circuit 111 becomes the first solution 101. For example, the second method calculates the second solution 102 of the combinatorial optimization problem, based on the first quantum circuit 111 to which the determined second value of the parameter 120 is set.

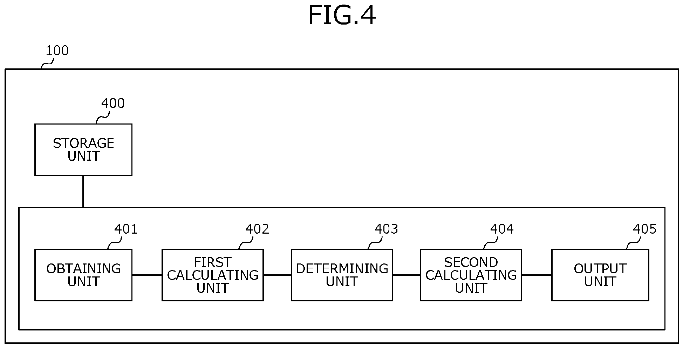

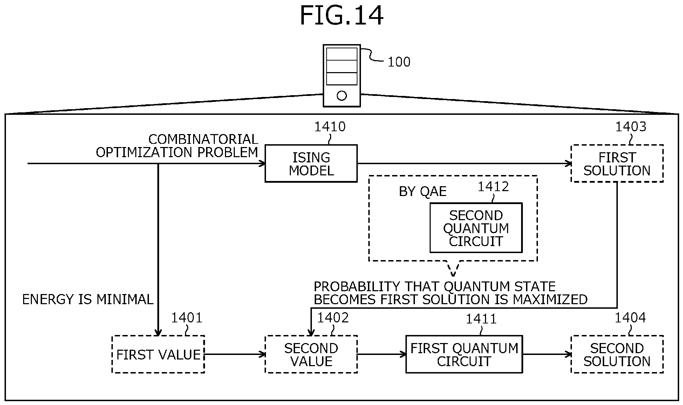

A first example corresponding to a case where the information processing device 100 solves a combinatorial optimization problem by the first method is described later with reference to Figs. 4 to 13. A second example corresponding to a case where the information processing device 100 solves a combinatorial optimization problem by the second method is described later with reference to Figs. 14 to 20.

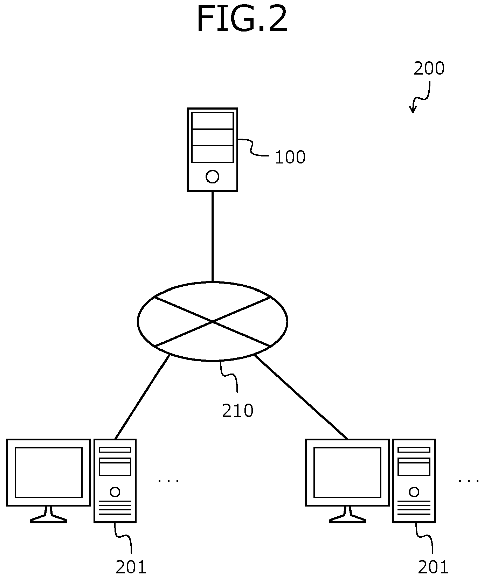

Next, an example of an information processing system to which the information processing device 100 depicted in Fig. 1 is applied is described with reference to Fig. 2.

Fig. 2 is an explanatory view depicting an example of an information processing system. In Fig. 2, the information processing system includes the information processing device 100 and a client device 201.

In the information processing system, the information processing device 100 and the client device 201 are communicate via a wired or wireless network 210. The network 210 is, for example, the local area Network (LAN), the wide area network (WAN), the Internet, or the like.

The information processing device 100 is a computer for solving a combinatorial optimization problem. (2-1) The information processing device 100 receives, for example, information indicating a combinatorial optimization problem from the client device 201. The information processing device 100 identifies a combinatorial optimization problem based on, for example, the received information. The information processing device 100 obtains, for example, a solution to the identified combinatorial optimization problem. The information processing device 100 transmits the obtained solution to the combinatorial optimization problem to the client device 201. The information processing device 100 is, for example, a server or a PC.

The client device 201 is a computer used by an operator who requests the solution of a combinatorial optimization problem. The client device 201 generates information indicating the combinatorial optimization problem based on, for example, an operation input by the operator, and transmits the information to the information processing device 100. The information indicating the combinatorial optimization problem includes, for example, an objective function of the combinatorial optimization problem. The information indicating the combinatorial optimization problem may include, for example, a constraint condition of the combinatorial optimization problem. The client device 201 receives the solution to the combinatorial optimization problem from the information processing device 100. The client device 201 outputs a solution to the combinatorial optimization problem so that the worker can refer to the solution. The client device 201 is, for example, a PC, a tablet terminal, or a smartphone.

While a case has been described where the information processing device 100 is a computer different from the client device 201, this is not limitative. For example, the information processing device 100 may have a function as the client device 201 and also operate as the client device 201.

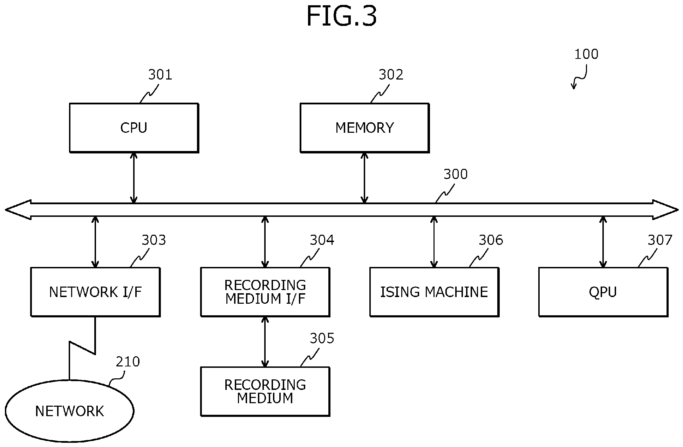

Next, an example of a hardware configuration of the information processing device 100 is described with reference to Fig. 3.

Fig. 3 is a block diagram depicting an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the information processing device 100 has an Ising machine 306 and a QPU 307. Further, the components are coupled to each other by a bus 300.

The CPU 301 governs overall control of the information processing device 100. The memory 302, for example, includes a read-only memory (ROM), a random-access memory (RAM), and a flash ROM. In particular, for example, the flash ROM and the ROM store therein various types of programs and the RAM is used as a work area of the CPU 301. The programs stored in the memory 302 are loaded onto the CPU 301, whereby encoded processes are executed by the CPU 301.

The network I/F 303 communicates with the network 210 through a communications line and communicates with other computers via the network 210. Further, the network I/F 303 administers an internal interface with the network 210 and controls the input and output of data from another computer. The network I/F 303 is, for example, a model, a LAN adapter, or the like.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, or the like. The recording medium 305 is a non-volatile memory storing data written thereto under the control of the recording medium I/F 304. The recording medium 305 is, for example, a disk, a semiconductor memory, a USB memory, or the like. The recording medium 305 may be removable from the information processing device 100.

The Ising machine 306 has an Ising model. The Ising machine 306 is a computing device that uses the Ising model to execute a digital annealer to solve a combinatorial optimization problem. The QPU 307 is a computing device that executes a quantum operation defined in a quantum circuit. The QPU 307 solves a combinatorial optimization problem by executing, for example, the QAOA.

In addition to the above components, the information processing device 100 may have, for example, a keyboard, a mouse, a display, a printer, a scanner, a microphone, a speaker, and/or the like. The information processing device 100 may also have the recording medium I/F 304 in plural and may have the recording medium 305 in plural. Moreover, the information processing device 100 may omit the recording medium I/F 304 and/or the recording medium 305.

An example of a hardware configuration of the client device 201 is, for example, similar to the example of the hardware configuration of the information processing device 100 depicted in Fig. 3 and thus, description thereof is omitted herein. The client device 201 may omit the Ising machine 306 and/or the QPU 307.

Description is given with reference to Figs. 4 to 12, a first example is described that corresponds to a case where the information processing device 100 solves a combinatorial optimization problem by the first method.

First, description is given with reference to Fig. 4; an example of a functional configuration of the information processing device 100 in the first example is described.

Fig. 4 is a block diagram depicting an example of a functional configuration of the information processing device 100 in the first example. The information processing device 100 includes a storage unit 400, an obtaining unit 401, a first calculating unit 402, a determining unit 403, a second calculating unit 404, and an output unit 405.

The storage unit 400 is implemented by, for example, a storage area such as the memory 302 or the recording medium 305 depicted in Fig. 3. Herein, while a case where the storage unit 400 is included in the information processing device 100 is described, configuration is not limited hereto. For example, the storage unit 400 may be included in a device different from the information processing device 100 and the storage contents of the storage unit 400 may be referred to from the information processing device 100.

The obtaining unit 401 to the output unit 405 function as an example of a control unit. For example, functions of the obtaining unit 401 to the output unit 405 are implemented by, for example, causing the CPU 301 to execute a program stored in a storage area such as the memory 302 or the recording medium 305 depicted in Fig. 3, or by the network I/F 303. The processing results of each functional unit are stored to a storage area such as the memory 302 or the recording medium 305 depicted in Fig. 3.

The storage unit 400 stores various pieces of information that is referred to or updated in the processing by each functional unit. The storage unit 400 stores, for example, information indicating a combinatorial optimization problem. The information indicating the combinatorial optimization problem includes, for example, an objective function of the combinatorial optimization problem. The information indicating the combinatorial optimization problem may include, for example, a constraint condition of the combinatorial optimization problem. The information indicating the combinatorial optimization problem is obtained, for example, by the obtaining unit 401. The information indicating the combinatorial optimization problem may be set in advance by a user.

The storage unit 400 stores, for example, an Ising model corresponding to the combinatorial optimization problem. The Ising model is obtained, for example, by the obtaining unit 401. The Ising model may be set in advance by the user. The storage unit 400 stores, for example, an initial value of the Ising model. The initial value corresponds to a candidate solution to the combinatorial optimization problem. The initial value is obtained, for example, by the obtaining unit 401. The initial value may be set in advance by the user, for example.

The storage unit 400 stores, for example, a first quantum circuit by the QAOA corresponding to a combinatorial optimization problem. The first quantum circuit represents a procedure of quantum operations. The first quantum circuit implements a function of outputting a quantum state corresponding to a solution of the combinatorial optimization problem. The first quantum circuit is obtained by, for example, the obtaining unit 401. The first quantum circuit may be set in advance by the user, for example.

The storage unit 400 stores, for example, a second quantum circuit by the QAE. The second quantum circuit includes, for example, a partial circuit. The partial circuit has, for example, an auxiliary quantum bit. When the quantum state of the first quantum circuit becomes the first solution, the quantum state of the auxiliary quantum bit becomes 1. The second quantum circuit is obtained by, for example, the obtaining unit 401. The second quantum circuit may be set in advance by the user, for example.

The obtaining unit 401 obtains various pieces of information used in the processing by each functional unit. The obtaining unit 401 stores the obtained various pieces of information to the storage unit 400 or outputs the obtained various pieces of information to each functional unit. The obtaining unit 401 may also output various pieces of information stored in the storage unit 400 to each functional unit. The obtaining unit 401 obtains various pieces of information based on, for example, an operation input by the user. The obtaining unit 401 may receive various pieces of information from, for example, a device different from the information processing device 100.

The obtaining unit 401 obtains, for example, a processing request requesting the solving of a combinatorial optimization problem. The processing request may include information indicating the combinatorial optimization problem, an Ising model, an initial value of the Ising model, a first quantum circuit, and a second quantum circuit. For example, the obtaining unit 401 obtains the processing request by receiving an input of the processing request based on an operation input by the user. For example, the obtaining unit 401 may receive the processing request from another computer. The other computer is, for example, the client device 201.

The obtaining unit 401 obtains, for example, information indicating a combinatorial optimization problem. For example, the obtaining unit 401 obtains the information indicating the combinatorial optimization problem by receiving an input of the information indicating the combinatorial optimization problem based on an operation input by the user. The obtaining unit 401 may, for example, receive the information indicating the combinatorial optimization problem from another computer. The other computer is, for example, the client device 201. For example, the obtaining unit 401 may obtain the information indicating the combinatorial optimization problem by extracting the information indicating the combinatorial optimization problem from a processing request.

The obtaining unit 401 obtains, for example, an Ising model. For example, the obtaining unit 401 obtains the Ising model by receiving an input of the Ising model based on an operation input by the user. For example, the obtaining unit 401 may receive the Ising model from another computer. The other computer is, for example, the client device 201. For example, the obtaining unit 401 may obtain the Ising model by extracting the Ising model from a processing request.

The obtaining unit 401 obtains, for example, an initial value of the Ising model. For example, the obtaining unit 401 obtains the initial value of the Ising model by receiving an input of the initial value of the Ising model based on an operation input by the user. For example, the obtaining unit 401 may receive the initial value of the Ising model from another computer. The other computer is, for example, the client device 201. For example, the obtaining unit 401 may obtain the initial value of the Ising model by extracting the initial value of the Ising model from a processing request.

The obtaining unit 401 obtains, for example, a first quantum circuit. For example, the obtaining unit 401 obtains the first quantum circuit by receiving an input of the first quantum circuit based on an operation input by the user. For example, the obtaining unit 401 may receive the first quantum circuit from another computer. The other computer is, for example, the client device 201. For example, the obtaining unit 401 may obtain the first quantum circuit by extracting the first quantum circuit from a processing request.

The obtaining unit 401 obtains, for example, the second quantum circuit. For example, the obtaining unit 401 obtains the second quantum circuit by receiving an input of the second quantum circuit based on an operation input by the user. For example, the obtaining unit 401 may receive the second quantum circuit from another computer. The other computer is, for example, the client device 201. For example, the obtaining unit 401 may obtain the second quantum circuit by extracting the second quantum circuit from a processing request.

The obtaining unit 401 may receive a start trigger for starting the process of any of the functional units. The start trigger may be, for example, a predetermined operation input by the user. The start trigger may be, for example, receipt of predetermined information from another computer. The start trigger may be, for example, output of predetermined information by any of the functional units. For example, the obtaining unit 401 assumes the obtaining of a processing request as a start trigger for starting processing by the first calculating unit 402, the determining unit 403, and the second calculating unit 404.

The first calculating unit 402 calculates a first solution to the combinatorial optimization problem based on the Ising model. For example, in response to the obtaining unit 401 obtaining a processing request, the first calculating unit 402 calculates a first solution to the combinatorial optimization problem, based on the set initial value and the Ising model. This enables the first calculating unit 402 to obtain a guideline for determining the parameter value of the QAOA and facilitate determination of the parameter value of the QAOA.

For example, each time the second calculating unit 404 calculates a second solution, the first calculating unit 402 sets the second solution as an initial value. For example, each time the second calculating unit 404 calculates a second solution, the first calculating unit 402 calculates a new first solution to the combinatorial optimization problem, based on the set initial value and the Ising model. This enables the first calculating unit 402 to obtain a guideline for determining the parameter value of the QAOA and facilitate determination of the parameter value of the QAOA. The first calculating unit 402 corresponds to, for example, the Ising machine 306 subordinate to the digital annealer.

The determining unit 403 determines the parameter value of the QAOA so that the probability that the quantum state of the first quantum circuit becomes the first solution calculated by the first calculating unit 402 is maximized. For example, each time the first calculating unit 402 calculates a first solution, the determining unit 403 determines the parameter value of the QAOA so that the probability that the quantum state of the first quantum circuit becomes the calculated first solution is maximized. For example, the determining unit 403 repeats the process of "updating the parameter value of the QAOA according to the result of measuring the probability that the quantum state of the first quantum circuit becomes the first solution based on the phase" using the second quantum circuit by the QAE. The phase defines the amplitude that identifies the probability that the quantum state of the first quantum circuit becomes the first solution. More specifically, the determining unit 403 repeats the process of "updating the parameter values of the QAOA according to the result of measuring the probability that the quantum state of the first quantum circuit becomes the first solution based on the phase" based on the distribution of the quantum state represented by the second quantum circuit.

This enables the determining unit 403 to appropriately determine the parameter values of the QAOA. Further, the determining unit 403 can facilitate calculation of the second solution of the combinatorial optimization problem, based on the first quantum circuit. The determining unit 403 can reduce the time required to determine the parameter values of the QAOA by utilizing the QAE. The determining unit 403 corresponds to, for example, the QPU 307.

The second calculating unit 404 calculates the second solution of the combinatorial optimization problem, based on the first quantum circuit in which the parameter values determined by the determining unit 403 are set. The second calculating unit 404 calculates the second solution of the combinatorial optimization problem based on, for example, the distribution of the quantum state represented by the first quantum circuit. For example, the second calculating unit 404 sets the parameter value in the first quantum circuit each time the determining unit 403 determines the parameter value. For example, the second calculating unit 404 calculates the second solution to the combinatorial optimization problem based on the first quantum circuit in which the parameter value is set. This allows the second calculating unit 404 to calculate an appropriate solution to the combinatorial optimization problem. The second calculating unit 404 corresponds to, for example, the QPU 307.

The information processing device 100 repeatedly executes a series of processes by the first calculating unit 402, the determining unit 403, and the second calculating unit 404 until a predetermined condition is satisfied. The predetermined condition is, for example, executing a series of processes a predetermined number of times. The predetermined condition may be, for example, calculating the second solution a predetermined number of times. The predetermined condition may be, for example, that a difference of the second solution currently calculated and the second solution calculated previously is not more than a threshold. This enables the information processing device 100 to bring the second solution calculated by the second calculating unit 404 closer to the optimal solution of the combinatorial optimization problem.

The output unit 405 outputs the processing result of at least any one of the functional units. The output format is, for example, display on a display, print output to a printer, transmission to an external device by the network I/F 303, or storage to a storage area such as the memory 302 or the recording medium 305. As a result, the output unit 405 can notify the user of the processing result of at least one of the functional units, and the convenience of the information processing device 100 can be improved.

The output unit 405 outputs the second solution calculated by the second calculating unit 404. The output unit 405 outputs, for example, the second solution last calculated by the second calculating unit 404. The output unit 405, for example, outputs the second solution last calculated by the second calculating unit 404 so that the user can refer to the second solution. The output unit 405, for example, may transmit the second solution last calculated by the second calculating unit 404 to another computer. As a result, the output unit 405 can make the solution of the combinatorial optimization problem available externally.

While a case has been described where the information processing device 100 includes the first calculating unit 402 and the second calculating unit 404, the present invention is not limited hereto. For example, the information processing device 100 may use the first calculating unit 402 by communicating with another computer having the first calculating unit 402. For example, the information processing device 100 may use the second calculating unit 404 by communicating with another computer having the second calculating unit 404.

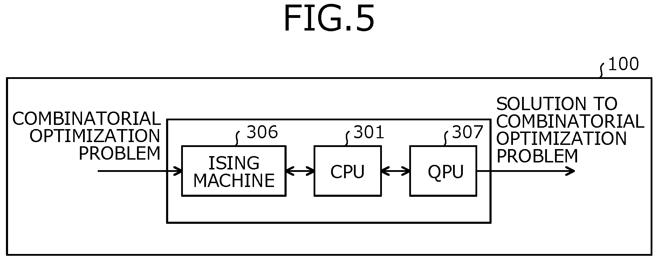

Next, an example of operation of the information processing device 100 in the first example is described with reference to Fig. 5.

Fig. 5 is an explanatory view depicting an example of operation of the information processing device 100 in the first example. In Fig. 5, the information processing device 100 obtains information indicating a combinatorial optimization problem $min(E=C(z))$. E is energy. $E=C(z)$ is an objective function to be minimized. z is a state. The information processing device 100 identifies the combinatorial optimization problem $min(E=C(z))$ based on the information indicating the combinatorial optimization problem.

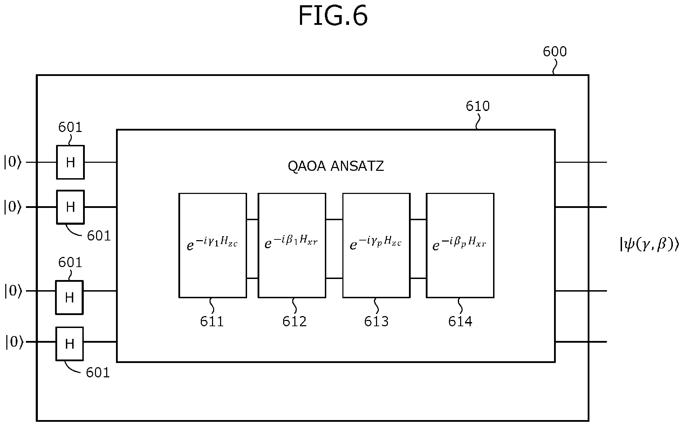

The information processing device 100 has an initial value for the Ising model. The initial value is, for example, the value of the state z. The information processing device 100 sets a first quantum circuit 600 by the QAOA corresponding to the combinatorial optimization problem. Here, description is given with reference to Fig. 6; an example of the first quantum circuit 600 is described.

Fig. 6 is an explanatory view depicting an example of the first quantum circuit 600. In Fig. 6, the first quantum circuit 600 includes Hadamard gates 601 representing operations on the quantum state of each quantum bit of n quantum bits, and a QAOA Ansatz 610 representing an operation on the quantum state of each quantum bit of n quantum bits. n is the number of quantum bits.

The QAOA Ansatz 610 includes gates 611 to 614. The gates 611 and 613 represent, for example, phase separation operators. The gates 612 and 614 represent, for example, mixing operators. The QAOA Ansatz 610 is defined by hyperparameters $(\gamma,\beta)$. The hyperparameters $(\gamma,\beta)$ are, for example, $p(\gamma_i,\beta_i)$. In the example depicted in Fig. 6, the level p of the QAOA Ansatz 610 is 2. p corresponds to the depth of the QAOA Ansatz 610.

Here, description is given with reference to Fig. 5, (5-1) the information processing device 100 calculates a state $z_0$ that is a solution to $C(z)$ based on an Ising model and an initial value using the Ising machine 306. The information processing device 100 calculates a state $z_0$ that is a solution to $C(z)$ based on an Ising model and an initial value using the Ising machine 306 according to, for example, a digital annealer.

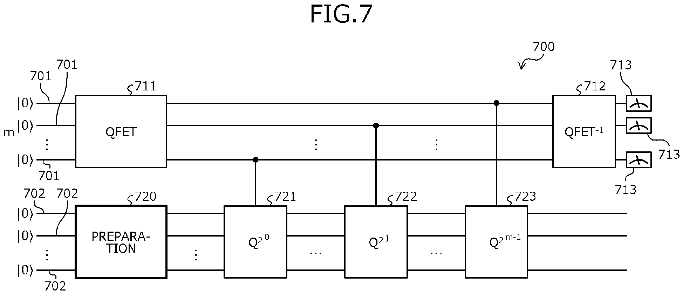

(5-2) The information processing device 100, using the CPU 301 and the QPU 307, determines the hyperparameters $(\gamma^*,\beta^*)$ so as to maximize the probability that the quantum state $|\psi(\gamma,\beta)\rangle$ of the first quantum circuit 600 becomes $z_0$. Next, description is given with reference to Fig. 7; an example of the information processing device 100 determining the hyperparameters $(\gamma^*,\beta^*)$ is described.

Fig. 7 is an explanatory view depicting an example of determining the hyperparameters $(\gamma^*,\beta^*)$. In Fig. 7, (7-1) the information processing device 100 applies the superposition state $|s\rangle$ to n quantum bits using the QPU 307. Here, the superposition state $|s\rangle$ is defined, for example, by the following formula (1).

$$|s\rangle = |+\rangle^{\otimes n} \quad …(1)$$

(7-2) The information processing device 100 identifies the quantum state $|\Psi(\gamma, \beta)\rangle$ by multiplying n quantum bits by $U_c(\gamma_1)U_x(\beta_1)...U_c(\gamma_p)U_x(p_p)$ according to $p(\gamma_i,\beta_i)$ using the QPU 307. $i=1, 2, ..., p$. The information processing device 100 measures the probability $p_{z0}(\gamma,\beta)=\langle\Psi(\gamma,\beta)z_0\rangle\langle z_0|\Psi(\gamma,\beta)'=\langle\Psi(\gamma,\beta)|z_0\rangle^2$ that the quantum state $|\Psi(\gamma, \beta)\rangle$ of the first quantum circuit 600 becomes $z_0$ by utilizing the QAE using the QPU 307.

The QAE is a method that utilizes the property that the square of the absolute value of the amplitude corresponding to a quantum state is the probability of the quantum state. For example, when $|\psi\rangle=\alpha|0\rangle+\beta|1\rangle$, $\alpha$ corresponds to the amplitude of quantum state 0, and $|\alpha|^2$ corresponds to the probability of quantum state 0. For example, when the following formula (2) is established, the QAE can identify the amplitude $\sin\theta$ value of $|\psi_1\rangle$, and can measure the

probability $p_{z0}(\gamma,\beta)$ based on $|\sin\theta|^2$.

$$|\psi\rangle_{n+1} = \mathcal{A}|0\rangle_n|0\rangle = \cos\theta|\psi_0\rangle_n|0\rangle + \sin\theta|\psi_1\rangle_n|1\rangle \quad ...(2)$$

It is therefore desirable to prepare a second quantum circuit 700 by the QAE, including a state preparing circuit representing $|\psi\rangle_{n+1}$ in the above formula (2). For the QAE, for example, refer to Brassard, Gilles, et al. "Quantum amplitude amplification and estimation." Contemporary Mathematics 305 (2002): 53-74; Kitaev, A. Yu. "Quantum measurements and the Abelian stabilizer problem." arXiv preprint quant-ph/9511026 (1995); and Suzuki, Yohichi, et al. "Amplitude estimation without phase estimation." Quantum Information Processing 19 (2020): 1-17.

The information processing device 100 prepares a second quantum circuit 700 using the QAE, for example, as depicted in Fig. 7. The second quantum circuit 700 relates to $m+2n+1$ quantum bits. Line segments 701 in Fig. 7 correspond to each quantum bit of the m quantum bits. Line segments 702 in Fig. 7 correspond to each quantum bit of the $2n+1$ quantum bits.

The m quantum bits correspond to the amplitude to be measured. Of the $2n+1$ quantum bits, n quantum bits correspond to the quantum state $|\psi(\gamma,\beta)\rangle$ of the first quantum circuit 600. Of the remaining $n+1$ quantum bits, n quantum bits correspond to the solution state $z_0$. The remaining one quantum bit is an ancillary quantum bit. The quantum state of the ancillary quantum bit becomes 1 when the quantum state $|\Psi(\gamma,\beta)\rangle$ of the first quantum circuit 600 becomes $z_0$.

The second quantum circuit 700 includes a gate 711 corresponding to the Fourier transform of the m quantum bits and a gate 712 corresponding to the inverse Fourier transform of the m quantum bits. The second quantum circuit 700 includes a measuring unit 713 for each quantum bit of the m quantum bits. The second quantum circuit 700 includes a state preparing circuit 720 for the $2n+1$ quantum bits. The second quantum circuit 700 includes quantum amplitude amplification circuits 721-723 for $2n+1$ quantum bits.

$Q=-S_\psi S_f$. $S_\psi=2|\psi\rangle_n\langle\psi|_n-I$. $S_\psi$ represents an operation of inverting around the axis $|\psi\rangle$. $S_f=|\psi_0\rangle_n\langle\psi_0|_n-|\psi_1\rangle_n\langle\psi_1|_n$. $S_f$ represents an operation of inverting the sign of $|\psi\rangle n$ when the quantum state of the ancillary quantum bit is 1. Here, the phase of Q is $e\pm j2\theta$. It is therefore considered that when the phase $\theta$ is obtained by the quantum phase estimate (QPE) in the second quantum circuit 700, the amplitude $\sin\theta$ can be specified.

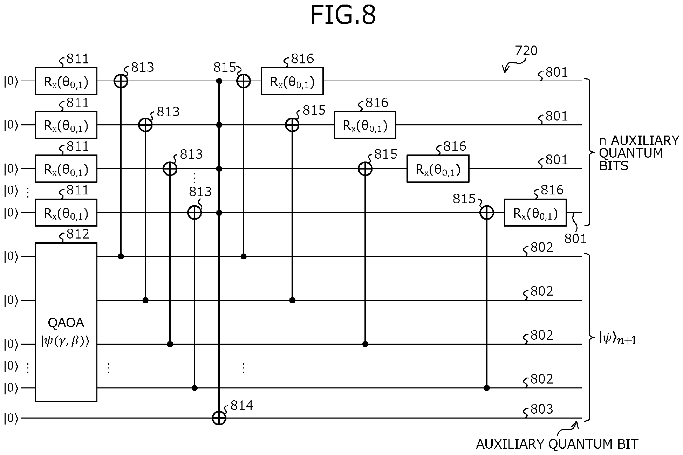

The information processing device 100 measures the probability $p_{z0}(\gamma,\beta)=\langle\psi(\gamma,B)|z_0\rangle\langle z_0|\gamma(\gamma,\beta)\rangle$ according to the prepared second quantum circuit 700, for example. Next, moving to the description of Fig. 8, an example of the state preparing circuit 720 is explained.

Fig. 8 is an explanatory view depicting an example of the state preparing circuit 720. Line segments 801 in Fig. 8 correspond to each quantum bit of the n quantum bits. The n line segments 801 correspond to the quantum state $|\Psi(\gamma,\beta)\rangle$ of the first quantum circuit 600. Line segments 802 in Fig. 8 correspond to each quantum bit of the n quantum bits. The n line segments 802 correspond to the state $z_0$ which is the solution. The line segment 803 in Fig. 8 corresponds to one ancillary quantum bit.

As depicted in Fig. 8, the state preparing circuit 720 includes a rotation gate 811 about the X-axis and a QAOA Ansatz 812. The QAOA Ansatz 812 prepares the quantum state $|\Psi(\gamma,\beta)\rangle$ of the first quantum circuit 600. The QAOA Ansatz 812 is, for example, the same as the QAOA Ansatz 610.

The state preparing circuit 720 also includes controlled-not (CNOT) gates 813 and CNOT gates 814. The combination of the CNOT gates 813 and 814 acts to set the quantum state of the ancillary quantum bit to 1 when the quantum state $|\Psi(\gamma,\beta)\rangle$ of the first quantum circuit 600 matches the solution state $z_0$.

The state preparing circuit 720 also includes CNOT gates 815 and rotation gates 816 around the X-axis. The combination of the CNOT gates 815 and the rotation gates 816 around the X-axis acts to undo the action of the combination of the rotation gates 811 around the X-axis and the CNOT gates 813. In the state preparing circuit 720, $\theta_{0,1}$ is dependent on $Z_0$. For example, if $Z_{0i}=0$, then $\theta_{0,1}=\pi$. For example, if $Z_{0i}=1$, then $\theta_{0,1}=0$.

Description is given with reference to Fig. 7; (7-3) the information processing device 100 determines hyperparameters $(\gamma^*,\beta^*)$ by the CPU 301 so that the measured probability $p_{z0}(\gamma,\beta)$ is maximized. The information processing device 100 determines the hyperparameters $(\gamma^*,\beta^*)$ by setting an objective function that maximizes the probability $p_{z0}(\gamma,\beta)$ using, for example, the Grid method, the BFGS method, the quadratic approximation method, the Powell method, or Bayesian estimation, to thereby calculate the hyperparameters $(\gamma^*,\beta^*)$.

The information processing device 100 repeatedly determines the hyperparameters $(\gamma^*,\beta^*)$ by the CPU 301 as described above. When the information processing device 100 determines the hyperparameters $(\gamma^*,\beta^*)$ a predetermined number of times by the CPU 301, the hyperparameters $(\gamma^*,\beta^*)$ are statistically determined. The predetermined number of times is, for example, set in advance. The predetermined number of times is, for example, a first number.

Description is given with reference to Fig. 5; (5-3) the information processing device 100, using the CPU 301 and the QPU 307, performs n-shot sampling of the quantum state $|\psi(\gamma^*,\beta^*)\rangle$ based on $(\gamma^*,\beta^*)$ according to the first quantum circuit 600, and determines the optimal classical state $z_1^*$. Here, description is given with reference to Fig. 6; an example of determining the optimal classical state $z_1^*$ is described.

Fig. 6 depicts an example of determining the optimal classical state $z_1^*$. In Fig. 6, the information processing device 100 applies the superposition state $|s\rangle$ to n quantum bits using the QPU 307. The information processing device 100 identifies the quantum state $|\Psi(\gamma^*,\beta^*)\rangle$ by multiplying n quantum bits by $U_c(\gamma_1)U_x(\beta_1)...U_c(\gamma_p)U_x(\beta_p)$ according to $(\gamma^*,\beta^*)$ using the QPU 307.

The information processing device 100 performs n-shot sampling of the quantum state $|\psi(\gamma^*,\beta^*)\rangle$ using the QPU 307 to determine n classical states $z_1$. For example, the information processing device 100 performs Z-direction projection measurement of the quantum state $|\psi(\gamma^*,\beta^*)\rangle$ represented by the first quantum circuit 600 to which $(\gamma^*,\beta^*)$ is set to obtain a state z n times using the QPU 307 to determine n classical states $z_1$.

The information processing device 100 determines, using the CPU 301, a classical state $z_1^*$ that is a provisional solution to a combinatorial optimization problem based on n classical states $z_1$. The information processing device 100, for example, determines, using the CPU 301, whether $\min(E_1)<\min(E_0,E_1^*)$. Here, for example, when $\min(E_1)<\min(E_0,E_1^*)$, the information processing device 100 determines, using the CPU 301, $z_{1*}$ to be $\mathrm{argmin}(E_1)$. On the other hand, for example, when $\min(E_1)<\min(E_0,E_1^*)$ is not established, the information processing device 100 determines $z_1^*$ based on $E_1$ and Hamming Distance, by using the CPU 301.

Description is given with reference to Fig. 5; (5-4) the information processing device 100 determines, using the CPU 301, whether the termination condition is satisfied. The termination condition is, for example, that the series of processes from (5-1) to (5-3) have been performed a predetermined number of times. The predetermined number of times is, for example, set in advance. The predetermined number of times is, for example, a second number. The second number may be the same as the first number. The termination condition may be defined by, for example, a threshold value for the energy E or the state z.

When the termination condition is not satisfied, the information processing device 100 sets the optimal classical state $z_1^*$ determined this time as the initial value of the Ising machine 306 by using the CPU 301 and performs the series of processes from (5-1) to (5-3) again.

When the termination condition is satisfied, the information processing device 100 outputs $\min(C(z_0),C(z_1^*))$ and $\mathrm{argmin}(C(z))$. $\mathrm{argmin}(C(z))$ is, for example, $z_0$ or $z_1^*$. This enables the information processing device 100 to accurately calculate $\mathrm{argmin}(C(z))$, which is the solution to the combinatorial optimization problem. The information processing device 100 can reduce the time required to calculate the solution to the combinatorial optimization problem.

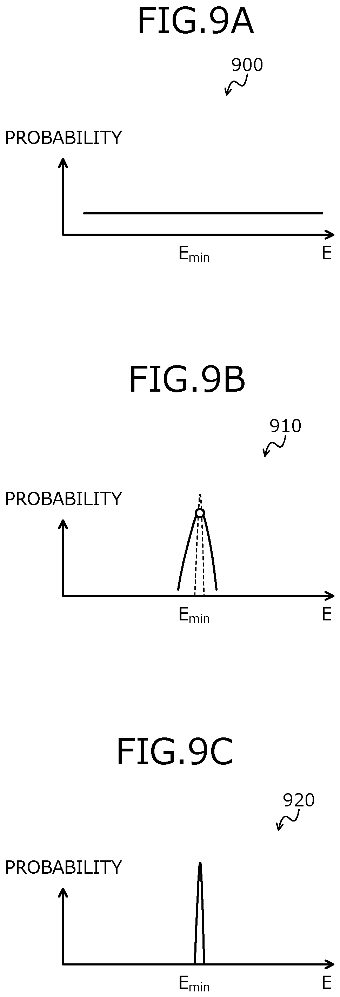

As described with reference to Figs. 7 and 8, the information processing device 100 can measure the probability $p_{z0}(\gamma,\beta)=\langle\psi(\gamma,B)|z_0\rangle\langle z_0|\gamma(\gamma,\beta)\rangle$ by utilizing the QAE. Thus, the information processing device 100 can suppress the measurement error to the order of $1/n^2$. Thus, when suppressing the measurement error, the information processing device 100 can suppress an increase in the number of shots, can reduce the time required for measurement, and can reduce the time required for calculation of the solution to the combinatorial optimization problem. Here, description is given with reference to Fig. 9 and an effect of the information processing device 100 is described.

Figs. 9A, 9B, and 9C are explanatory views depicting an effect of the information processing device 100. A graph 900 in Fig. 9A depicts the distribution of the probability that the quantum state initially represents a classical state z that takes each value of the energy E. As depicted in the graph 900 in Fig. 9A, the distribution of the probability that the quantum state initially represents a classical state z that takes each value of the energy E is uniform.

On the other hand, the information processing device 100 determines the hyperparameters $(\gamma,\beta)$ for the combinatorial optimization problem according to the calculation result of the Ising machine 306, prior to the QAOA, so that the probability that the quantum state will represent a classical state z that takes a value in a vicinity of $E_{min}$ is high. A graph 910 in Fig. 9B depicts the distribution of the probability that the quantum state will represent a classical state z that takes each value of the energy E after the hyperparameters $(\gamma,\beta)$ are determined. As depicted in the graph 910 in Fig. 9B, the probability that the quantum state will represent a classical state z that takes a value in a vicinity of $E_{min}$ is high. This enables the information processing device 100 to improve the efficiency of searching for an optimal solution by the QAOA.

Then, the information processing device 100 calculates a solution to the combinatorial optimization problem by the QAOA after increasing the probability that the quantum state represents a classical state z that takes a value in a vicinity of $E_{min}$. A graph 920 in Fig. 9C depicts a distribution of the probability that the quantum state represents a classical state z that takes each value of the energy E when a solution to the combinatorial optimization problem is calculated by the QAOA. As depicted in the graph 920 in Fig. 9C, the probability increases that the quantum state represents a classical state z that takes a value in a narrow range closer to $E_{min}$ in a vicinity of $E_{min}$.

As a result, the information processing device 100 can efficiently and accurately bring the solution to the combinatorial optimization problem closer to an optimal solution by the QAOA. For example, the information processing device 100 can consider all states represented by the quantum state that can be a solution to the combinatorial optimization problem by the QAOA and can accurately calculate the solution to the combinatorial optimization problem. Thus, the information processing device 100 can reduce the time required to calculate a solution to the combinatorial optimization problem by the QAOA.

Furthermore, when calculating a solution to a combinatorial optimization problem by the QAOA, the information processing device 100 can utilize the QAE to reduce the time required to measure the probability $p_{z0}(\gamma,\beta)$. Thus, the

information processing device 100 can more easily reduce the time required to calculate a solution to a combinatorial optimization problem by the QAOA.

While a case has been described where the information processing device 100 uses the QPU 307 to determine the hyperparameters $(\gamma^*,\beta^*)$ and to determine the optimal classical state $z_1^*$, the present invention is not limited hereto. For example, the information processing device 100 may have a quantum computer simulator. For example, the information processing device 100 uses the quantum computer simulator to determine the hyperparameters $(\gamma^*,\beta^*)$ and to determine the optimal classical state $z_1^*$.

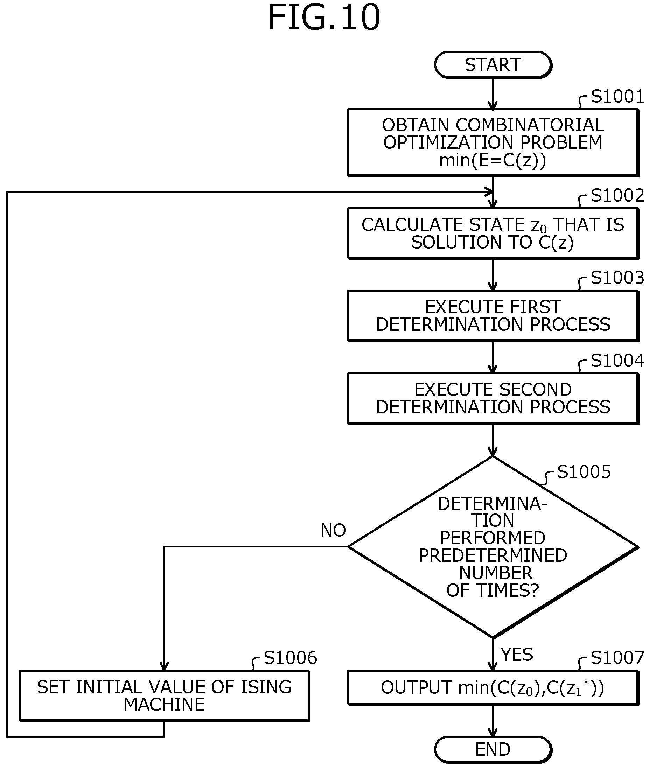

Next, description is given with reference to Fig. 10; an example of an overall processing procedure in the first example executed by the information processing device 100 is described. The overall processing is implemented by, for example, the CPU 301, storage areas such as the memory 302 and the recording medium 305, the network I/F 303, the Ising machine 306, and the QPU 307 depicted in Fig. 3.

Fig. 10 is a flowchart depicting an example of an overall processing procedure in the first example. In Fig. 10, the information processing device 100 obtains a combinatorial optimization problem min(E=C(z)) by the CPU 301 (step S1001). The information processing device 100 then calculates a state z0 that is a solution to C(z) based on an initial value by the Ising machine 306 (step S1002).

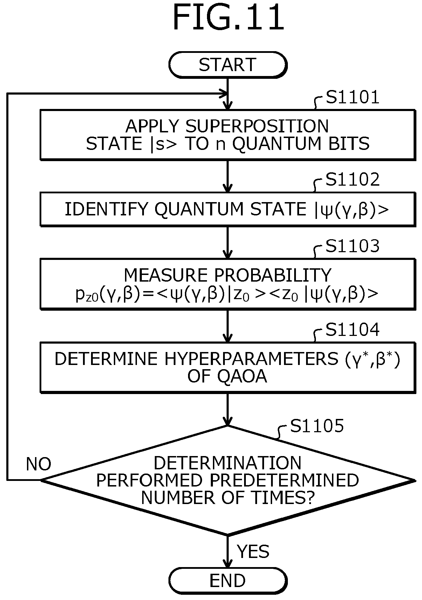

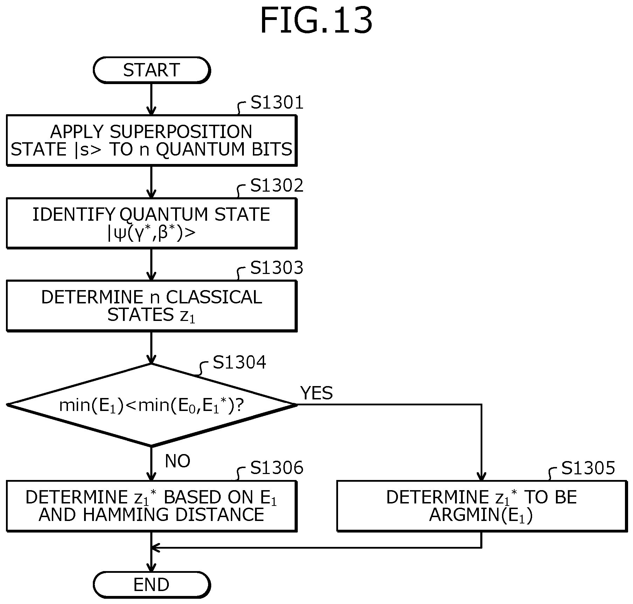

Next, the information processing device 100 executes a first determination process using the QPU 307 (described later with reference to Fig. 11) to determine the hyperparameters $(\gamma^*,\beta^*)$ of the QAOA so that the probability that the quantum state $|\Psi(\gamma,\beta)>$ becomes $z_0$ is maximized (step S1003). Then, the information processing device 100 executes a second determination process using the QPU 307 (described later with reference to Fig. 13) to perform n-shot sampling of the quantum state $|\Psi(\gamma^*,\beta^*)>$ and determine the optimal classical state $z_1^*$ (step S1004).

The information processing device 100 then determines whether the optimal classical state $z_1^*$ has been determined a predetermined number of times (step S1005). The predetermined number of times is set in advance by the user, for example. Here, when the optimal classical state $z_1^*$ has not been determined the predetermined number of times (step S1005: NO), the information processing device 100 proceeds to the process at step S1006. On the other hand, when the determination has been made the predetermined number of times (step S1005: YES), the information processing device 100 proceeds to the process at step S1007.

At step S1006, the information processing device 100 sets the initial value of the Ising machine 306 to the optimal classical state $z_1^*$ (step S1006). Then, the information processing device 100 returns to the process at step S1002.

At step S1007, the information processing device 100 outputs $\min(C(z_0),C(z_1^*))$ (step S1007). The information processing device 100 may also output argmin(C(z)). Then, the information processing device 100 ends the overall processing.

An example of a procedure of a first determination process in the first example executed by the information processing device 100 is described with reference to Fig. 11. The first determination process is implemented by, for example, the CPU 301, the memory area such as the memory 302 and the recording medium 305, the network I/F 303, and the QPU 307 depicted in Fig. 3.

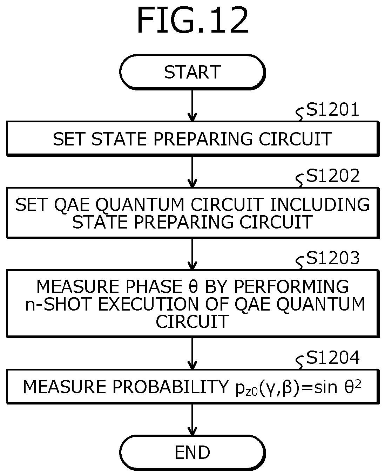

Fig. 11 is a flowchart depicting an example of a procedure of the first determination process in the first example. In Fig. 11, the information processing device 100 applies the superposition state |s> to n quantum bits (step S1101). The information processing device 100 then identifies the quantum state $|\Psi(\gamma,\beta)>$ by performing a measurement process described later with reference to Fig. 12 (step S1102).

The information processing device 100 then measures the probability $p_{z0}(\gamma,\beta)=<\Psi(\gamma,\beta)|z_0><z_0|\Psi(\gamma,\beta)>$ by performing a measurement process described later with reference to Fig. 12 (step S1103). Then, the information processing device 100 determines the hyperparameters $(\gamma^*,\beta^*)$ of the QAOA so that the probability $p_{z0}(\gamma,\beta)$ is maximized (step S1104).

The information processing device 100 then judges whether the hyperparameters $(\gamma^*,\beta^*)$ of the QAOA have been determined a predetermined number of times (step S1105). The predetermined number of times is set in advance by the user, for example. Here, when the determination has not been performed the predetermined number of times (step S1105: NO), the information processing device 100 returns to the process at step S1101. On the other hand, when the determination has been performed the predetermined number of times (step S1105: YES), the information processing device 100 ends the first determination process.

An example of a measurement process procedure executed by the information processing device 100 is described with reference to Fig. 12. The measurement process is implemented by, for example, the CPU 301, the memory area such as the memory 302 and the recording medium 305, the network I/F 303, and the QPU 307 depicted in Fig. 3.

Fig. 12 is a flowchart depicting an example of a procedure of the measurement process. In Fig. 12, the information processing device 100 sets a state preparing circuit based on $z_0$, $\gamma$, and $\beta$ (step S1201). Then, the information processing device 100 sets a QAE quantum circuit including the state preparing circuit that has been set (step S1202).

The information processing device 100 then measures the phase $\theta$ by performing n-shot execution of the set QAE quantum circuit (step S1203). Then, the information processing device 100 measures the probability $p_{z0}(\gamma,\beta)=\sin\theta^2$

based on the phase θ (step S1204). Thereafter, the information processing device 100 ends the measurement process.

An example of a procedure of the second determination process in the first example executed by the information processing device 100 is described with reference to Fig. 13. The second determination process is implemented, for example, by the CPU 301 depicted in Fig. 3, storage areas such as the memory 302 and recording medium 305, the network I/F 303, and the QPU 307.

Fig. 13 is a flowchart depicting an example of the procedure of the second determination process in the first example. In Fig. 13, the information processing device 100 applies the superposition state |s> to n quantum bits (step S1301).

The information processing device 100 then multiplies n quantum bits by $U_c(\gamma_1)U_x(\beta_1)...U_c(\gamma_p)U_x(\beta_p)$ according to the most recent $(\gamma^*,\beta^*)$ to identify the quantum state $|\Psi(\gamma^*,\beta^*)>$ (step S1302). Then, the information processing device 100 performs n-shot sampling of the quantum state $|\psi(\gamma^*,\beta^*)>$ to determine n classical states $z_1$ (step S1303).

The information processing device 100 then calculates the energy $E_1$ corresponding to each classical state $z_1$ and determines whether $\min(E_1)<\min(E_0,E_1^*)$ (step S1304). $E_0$ is the energy corresponding to $z_0$. $E_1^*$ is the energy corresponding to $z_1^*$. $z_1^*$ represents a classical state that is determined to be optimal at the current time point.

When $\min(E_1)<\min(E_0,E_1^*)$ is satisfied (step S1304: YES), the information processing device 100 proceeds to the process at step S1305. On the other hand, when $\min(E_1)<\min(E_0,E_1^*)$ is not satisfied (step S1304: NO), the information processing device 100 proceeds to the process at step S1306.

At step S1305, the information processing device 100 determines $z_1^*$ to be $\mathrm{argmin}(E_1)$ (step S1305). $\mathrm{argmin}(E_1)$ represents any classical state $z_1$ that takes $\min(E_1)$ among $E_1$ corresponding to the classical states $z_1$. Then, the information processing device 100 ends the second determination process.

At step S1306, the information processing device 100 determines $z_1^*$ based on $E_1$ and Hamming Distance (step S1306). $E_1$ and Hamming Distance are, for example, $((E_1-E_0)\times\mathrm{Hamming\ Distance}\ (z_1,z_0))^{-1}$. Then, the information processing device 100 ends the second determination process.

The information processing device 100 may omit some of the processes in the flowcharts in Figs. 10 to 13. For example, the processes at steps S1005 and S1006 can be omitted. For example, the process at step S1105 can be omitted.

A second example corresponding to a case where the information processing device 100 solves a combinatorial optimization problem by the above second method is described with reference to Figs. 14 to 20.

First, the operation flow of the information processing device 100 in the second example is described with reference to Fig. 14.

Fig. 14 is an explanatory view depicting the operation flow of the information processing device 100 in the second example. In Fig. 14, the information processing device 100 obtains a combinatorial optimization problem. The information processing device 100 obtains, for example, an objective function $\min(E=C(z))$ of the combinatorial optimization problem. z is, for example, a state and represents a combination of variables. E is, for example, energy. Here, it is desired to find a state z that minimizes $E=C(z)$, which is a solution to the combinatorial optimization problem.

The information processing device 100 has, for example, an Ising machine. The information processing device 100 sets, for example, an Ising model 1410 corresponding to the obtained combinatorial optimization problem. The information processing device 100 sets a first quantum circuit 1411 by the QAOA corresponding to a combinatorial optimization problem, which represents a quantum state corresponding to the state z, for example. The first quantum circuit 1411 is, for example, QAOA Anzatz. The quantum state probabilistically represents each value that the state z can take, for example.

(14-1) The information processing device 100 determines a first value 1401 of a parameter of the first quantum circuit 1411 so that the energy corresponding to the quantum state of the first quantum circuit 1411 is minimized. The energy corresponds to, for example, a measured value of $<\psi(\gamma,\beta)|C(z)|\psi(\gamma,\beta)>$. This enables the information processing device 100 to approximate the first quantum circuit 1411 to an eigenvalue problem. For information on approximating the first quantum circuit 1411 to an eigenvalue problem, for example, refer to Peruzzo, Alberto, et al. "A variational eigenvalue solver on a photonic quantum processor." Nature communications 5.1 (2014): 4213.

(14-2) The information processing device 100 calculates a first solution 1403 of the combinatorial optimization problem, based on the set Ising model 1410. The information processing device 100 uses, for example, a digital annealer Ising machine to calculate a state $z_0$ that becomes the first solution 1403 of the combinatorial optimization problem, based on the Ising model 1410 and the set initial value. The initial value is, for example, set in advance by the user. The initial value is, for example, the value of the state z.

(14-3) The information processing device 100 determines a second value 1402 of the parameter of the first quantum circuit 1411 so that the probability that the quantum state of the set first quantum circuit 1411 becomes the calculated first solution 1403 is maximized. For example, the information processing device 100 determines the second value 1402 of the parameter of the first quantum circuit 1411 from the first value 1401 of the parameter of the first quantum circuit 1411 so that the probability that the quantum state of the first quantum circuit 1411 becomes the first solution 1403 is maximized.

For example, the information processing device 100 sets a second quantum circuit 1412 by the QAE. The second quantum circuit 1412 includes, for example, a partial circuit. The partial circuit has, for example, an auxiliary quantum bit. When the quantum state of the first quantum circuit 1411 becomes the first solution 1403, the quantum state of the auxiliary quantum bit becomes 1. The information processing device 100 repeats a process of updating the parameter value of the first quantum circuit 1411 from the first value 1401 of the parameter of the first quantum circuit 1411 by using the second quantum circuit 1412, for example, by the QPU. As a result, the information processing device 100 determines the second value 1402 of the parameter of the first quantum circuit 1411.

At this time, in the updating process, first, for example, the information processing device 100 measures the probability that the quantum state of the first quantum circuit 1411 becomes the first solution 1403 based on the phase. The phase defines an amplitude that identifies the probability that the quantum state of the first quantum circuit 1411 becomes the first solution 1403. In the updating process, for example, next, the information processing device 100 updates the parameter value of the first quantum circuit 1411 according to the result of measuring the probability.

(14-4) The information processing device 100 calculates a second solution 1404 of the combinatorial optimization problem based on the first quantum circuit 1411 in which the determined second value 1402 of the parameter is set. The information processing device 100 performs n-shot sampling of the quantum state by, for example, the QPU 307, and calculates a state $z_1$ which is the second solution 1404.

For example, the information processing device 100 repeats n times the Z-direction projection measurement of the quantum state represented by the first quantum circuit 1411 in which the determined second value 1402 of the parameter is set and thereby obtains a state z. For example, based on the distribution of the obtained states z, the information processing device 100 calculates a state $z_1$, which is the second solution 1404.

Thereby, the information processing device 100 can facilitate solving the combinatorial optimization problem. The information processing device 100 can appropriately set the parameters of the first quantum circuit 1411, based on the first solution 1403 calculated using the Ising model 1410 and can reduce the time required to perform the QAOA. The information processing device 100 can obtain a state $z_1$ that is relatively close to the optimal solution and is a preferable solution.

Furthermore, the information processing device 100 can measure the probability that the quantum state of the first quantum circuit 1411 becomes the first solution 1403, by utilizing the QAE without relying on the Hadamard test. Here, according to the QAE, the measurement error is considered to be on the order of $1/n^2$. n is the number of shots. Thus, the information processing device 100 can reduce the time required for measurement while suppressing the measurement error and can reduce the time required for performing the QAOA.

(14-5) The information processing device 100 may set the calculated state $z_1$ as a new initial value and repeat the series of processes indicated by (14-1), (14-2), (14-3), and (14-4) until the convergence condition is satisfied. The convergence condition is, for example, that the series of processes is performed a predetermined number of times. This enables the information processing device 100 to solve the combinatorial optimization problem with high accuracy. The information processing device 100 can obtain a state $z_1$ that is closer to the optimal solution and that is a preferable solution.

Here, for example, it is considered that the combinatorial optimization problem is a MaxCut problem, and the first quantum circuit 1411 solves the combinatorial optimization problem without approximation to an eigenvalue problem. In this case, when the depth p of the first quantum circuit 1411 is relatively small, the first quantum circuit 1411 cannot express the entire picture of the combinatorial optimization problem, and it may be difficult to solve the combinatorial optimization problem with high accuracy. On the other hand, the information processing device 100 can easily solve a combinatorial optimization problem with high accuracy even when the depth p of the first quantum circuit 1411 is relatively small.

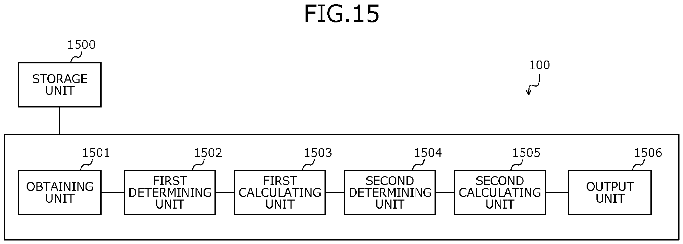

An example of a functional configuration of the information processing device 100 in the second example is described with reference to Fig. 15.

Fig. 15 is a block diagram depicting an example of a functional configuration of the information processing device 100 in the second example. The information processing device 100 includes a storage unit 1500, an obtaining unit 1501, a first determining unit 1502, a first calculating unit 1503, a second determining unit 1504, a second calculating unit 1505, and an output unit 1506.

The storage unit 1500 is implemented by, for example, a storage area such as the memory 302 or the recording medium 305 depicted in FIG. 3. In the following, while a case where the storage unit 1500 is included in the information processing device 100 is described, configuration is not limited hereto. For example, the storage unit 1500 may be included in a device different from the information processing device 100 and the storage contents of the storage unit 1500 may be referable from the information processing device 100.

The obtaining unit 1501 to the output unit 1506 function as an example of a control unit. For example, functions of the obtaining unit 1501 to the output unit 1506 are implemented by, for example, having the CPU 301 execute a program stored in a storage area such as the memory 302 or the recording medium 305 depicted in Fig. 3, or by the network I/F 303. The processing results of each functional unit are stored to a storage area such as the memory 302 or the recording medium 305 depicted in Fig. 3.

The storage unit 1500 stores various pieces of information that is referred to or updated in the processing by each functional unit. The storage unit 1500 stores, for example, information indicating a combinatorial optimization problem. The information indicating the combinatorial optimization problem includes, for example, an objective function of the combinatorial optimization problem. The information indicating the combinatorial optimization problem may include, for example, a constraint condition of the combinatorial optimization problem. The information indicating the combinatorial optimization problem is obtained by, for example, the obtaining unit 1501. The information indicating the combinatorial optimization problem may be set in advance by, for example, the user.

The storage unit 1500 stores, for example, an Ising model corresponding to the combinatorial optimization problem. The Ising model is obtained by, for example, the obtaining unit 1501. The Ising model may be set in advance by, for example, the user. The storage unit 1500 stores, for example, an initial value of the Ising model. The initial value corresponds to a candidate solution to the combinatorial optimization problem. The initial value is obtained by, for example, the obtaining unit 1501. The initial value may be set in advance by, for example, the user.

The storage unit 1500 stores, for example, a first quantum circuit by the QAOA corresponding to the combinatorial optimization problem. The first quantum circuit represents a procedure of quantum operation. The first quantum circuit has a function of outputting a quantum state corresponding to a solution to the combinatorial optimization problem. The first quantum circuit is obtained by, for example, the obtaining unit 1501. The first quantum circuit may be set in advance by the user, for example.

The storage unit 1500 stores, for example, a second quantum circuit by the QAE. The second quantum circuit includes, for example, a partial circuit. The partial circuit has, for example, an auxiliary quantum bit. When the quantum state of the first quantum circuit becomes the first solution, the quantum state of the auxiliary quantum bit becomes 1. The second quantum circuit is obtained by, for example, the obtaining unit 1501. The second quantum circuit may be set in advance by the user, for example.

The obtaining unit 1501 obtains various pieces of information used in the processes by each functional unit. The obtaining unit 1501 stores the obtained various pieces of information in the storage unit 1500 or outputs the information to the functional units. The obtaining unit 1501 may also output the various pieces of information stored in the storage unit 1500 to the functional units. The obtaining unit 1501 obtains various pieces of information based on, for example, an operation input by the user. The obtaining unit 1501 may receive various pieces of information from, for example, a device other than the information processing device 100.

The obtaining unit 1501 obtains, for example, a processing request for solving a combinatorial optimization problem. The processing request may include information indicating the combinatorial optimization problem, an Ising model, an initial value of the Ising model, a first quantum circuit, and a second quantum circuit. The obtaining unit 1501 for example obtains the processing request by receiving an input of the processing request based on an operation input by the user. The obtaining unit 1501, for example, may receive the processing request from another computer. The other computer is, for example, the client device 201.

The obtaining unit 1501 obtains, for example, information indicating the combinatorial optimization problem. The obtaining unit 1501, for example, obtains the information indicating the combinatorial optimization problem by receiving an input of the information indicating the combinatorial optimization problem based on an operation input by the user. The obtaining unit 1501, for example, may receive the information indicating the combinatorial optimization problem from another computer. The other computer is, for example, the client device 201. For example, the obtaining unit 1501 may obtain information indicating a combinatorial optimization problem by extracting information indicating a combinatorial optimization problem from the processing request.

The obtaining unit 1501 obtains, for example, an Ising model. For example, the obtaining unit 1501 obtains an Ising model by receiving an input of the Ising model based on an operation input by the user. For example, the obtaining unit 1501 may receive the Ising model from another computer. The other computer is, for example, the client device 201. For example, the obtaining unit 1501 may obtain the Ising model by extracting the Ising model from the processing request.

The obtaining unit 1501 obtains, for example, an initial value of the Ising model. For example, the obtaining unit 1501 obtains the initial value of the Ising model by receiving an input of the initial value of the Ising model based on an operation input by the user. For example, the obtaining unit 1501 may receive the initial value of the Ising model from another computer. The other computer is, for example, the client device 201. For example, the obtaining unit 1501 may obtain the initial value of the Ising model by extracting the initial value of the Ising model from the processing request.

The obtaining unit 1501 obtains, for example, a first quantum circuit. For example, the obtaining unit 1501 obtains the first quantum circuit by receiving an input of the first quantum circuit based on an operation input of the user. For example, the obtaining unit 1501 may receive the first quantum circuit from another computer. The other computer is, for example, the client device 201. For example, the obtaining unit 1501 may obtain the first quantum circuit by extracting the first quantum circuit from the processing request.

The obtaining unit 1501 obtains, for example, a second quantum circuit. For example, the obtaining unit 1501 obtains the second quantum circuit by receiving an input of the second quantum circuit based on an operation input of the user. The obtaining unit 1501 may for example receive the second quantum circuit from another computer. The other computer is, for example, the client device 201. The obtaining unit 1501 may obtain the second quantum circuit, for example, by extracting the second quantum circuit from a processing request.

The obtaining unit 1501 may receive a start trigger for starting processes of any of the functional units. The start trigger may be, for example, a predetermined operation input by the user. The start trigger may be, for example, reception of predetermined information from another computer. The start trigger may be, for example, output of predetermined information by any of the functional units. The obtaining unit 1501 assumes, for example, the obtaining of a processing request as a start trigger for starting processing by the first determining unit 1502, the first calculating unit 1503, the second determining unit 1504, and the second calculating unit 1505.

The first determining unit 1502 determines a first value of a parameter of the QAOA such that the energy corresponding to the quantum state of the first quantum circuit is minimized. For example, in response to the obtaining of a processing request by the obtaining unit 1501, the first determining unit 1502 determines a first value of a parameter of the QAOA such that the energy corresponding to the quantum state of the first quantum circuit is minimized. This enables the first determining unit 1502 to appropriately determine the parameter of the QAOA and to approximate the first quantum circuit to an eigenvalue problem.

For example, each time the second calculating unit 1505 calculates the second solution, the first determining unit 1502 newly determines the first value of the parameter of the QAOA so that the energy corresponding to the quantum state of the first quantum circuit is minimized. As a result, the first determining unit 1502 can appropriately determine the parameter of the QAOA, and the first quantum circuit can be approximated to an eigenvalue problem. The first determining unit 1502 corresponds to the QPU 307.

The first calculating unit 1503 calculates a first solution of the combinatorial optimization problem based on the Ising model. For example, in response to the obtaining unit 1501 obtaining a processing request, the first calculating unit 1503 calculates a first solution of the combinatorial optimization problem based on the set initial value and the Ising model. As a result, the first calculating unit 1503 can obtain a guideline for determining the parameter of the QAOA, and can easily determine the parameter of the QAOA.

For example, each time the second calculating unit 1505 calculates a second solution, the first calculating unit 1503 sets the second solution as an initial value. For example, the first calculating unit 1503 calculates a new first solution of the combinatorial optimization problem based on the set initial value and the Ising model each time the second calculating unit 1505 calculates the second solution. This enables the first calculating unit 1503 to obtain a guideline for determining the parameters of the QAOA, thereby facilitating determination of the parameters of the QAOA. The first calculating unit 1503 corresponds to, for example, the Ising machine 306.

The second determining unit 1504 determines a second value of the parameters of the QAOA from the first value of the parameters of the QAOA so that the probability that the quantum state of the first quantum circuit becomes the first solution calculated by the first calculating unit 1503 is maximized. For example, each time the first calculating unit 1503 calculates the first solution, the second determining unit 1504 determines a second value of the parameter of the QAOA from the first value of the parameter of the QAOA so that the probability that the quantum state of the first quantum circuit becomes the first solution is maximized. For example, the second determining unit 1504 repeats the process of "updating the value of the parameter according to the result of measuring the probability that the quantum state of the first quantum circuit becomes the first solution based on the phase" from the first value of the parameter of the QAOA using the second quantum circuit by the QAE. The phase defines, for example, an amplitude that identifies the probability that the quantum state of the first quantum circuit becomes the first solution.

As described, the second determining unit 1504 can determine the second value of the parameter of the QAOA. The second determining unit 1504 can appropriately determine the value of the parameter of the QAOA. Further, the second determining unit 1504 can easily calculate the second solution of the combinatorial optimization problem based on the first quantum circuit. The second determining unit 1504 can utilize the QAE to reduce the time required to determine the second value of the parameter of the QAOA. The determining unit 403 corresponds to, for example, the QPU 307.

The second calculating unit 1505 calculates the second solution of the combinatorial optimization problem based on the first quantum circuit in which the second value of the parameter determined by the second determining unit 1504 is set. For example, each time the second determining unit 1504 determines the second value of the parameter, the second calculating unit 1505 sets the second value of the parameter in the first quantum circuit. The second calculating unit 1505 calculates the second solution of the combinatorial optimization problem based on, for example, the first quantum circuit in which the second value of the parameter is set. This enables the second calculating unit 1505 to calculate an appropriate solution to the combinatorial optimization problem. The second calculating unit 1505 corresponds to the QPU 307.

The information processing device 100 repeatedly executes a series of processes by the first determining unit 1502, the first calculating unit 1503, the second determining unit 1504, and the second calculating unit 1505 until a predetermined condition is satisfied. The predetermined condition is, for example, executing a series of processes a predetermined number of times. The predetermined condition may be, for example, calculating the second solution a predetermined number of times. The predetermined condition may be that, for example, the difference between the second solution calculated this time and the second solution calculated previously is not more than a threshold. This enables the information processing device 100 to bring the second solution calculated by the second calculating unit 1505 closer to the optimal solution of the combinatorial optimization problem.

The output unit 1506 outputs the processing result of at least one of the functional units. The output format is, for example, display on a display, print output to a printer, transmission to an external device via the network I/F 303, or storage to a storage area such as the memory 302 or the recording medium 305. As a result, the output unit 1506 can notify the user of the processing result of at least one of the functional units, thereby improving the convenience of the information processing device 100.

The output unit 1506 outputs the second solution calculated by the second calculating unit 1505. The output unit 1506 outputs, for example, the second solution calculated most recently by the second calculating unit 1505. The output unit 1506, for example, outputs the second solution calculated most recently by the second calculating unit 1505 so that the user can refer to the second solution . The output unit 1506, for example, may transmit the second solution calculated most recently by the second calculating unit 1505 to another computer. As a result, the output unit 1506 can make the solution to the combinatorial optimization problem available externally.

While a case has been described where the information processing device 100 includes the first calculating unit 1503 and the second calculating unit 1505, the present invention is not limited hereto. For example, the information processing device 100 may use the first calculating unit 1503 by communicating with another computer having the first calculating unit 1503. For example, the information processing device 100 may use the second calculating unit 1505 by communicating with another computer having the second calculating unit 1505.

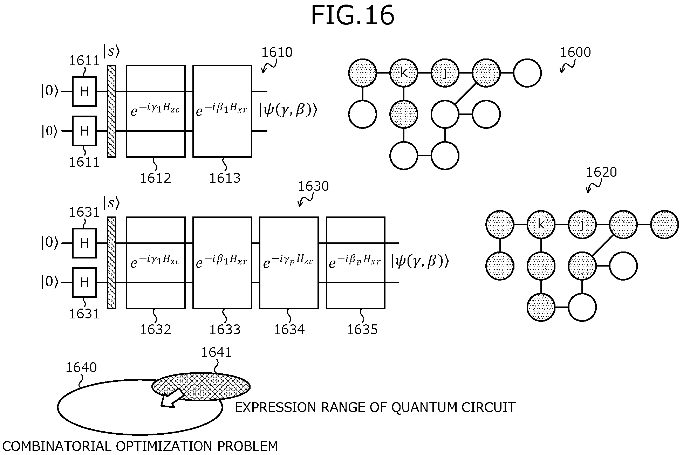

An example of operation of the information processing device 100 in the second example is described with reference to Fig. 16.

Fig. 16 is an explanatory view depicting an example of the operation of the information processing device 100 in the second example. In Fig. 16, the information processing device 100 obtains information indicating a combinatorial optimization problem min(E=C(z)) in the same way as in Fig. 5. E is energy. E=C(z) is an objective function to be minimized. z is a state. The information processing device 100 identifies a combinatorial optimization problem min(E=C(z)) based on information indicating the combinatorial optimization problem. The information processing device 100 has an initial value for the Ising model, as in Fig. 5. The initial value is, for example, the value of the state z. As in Fig. 5, the information processing device 100 sets a quantum circuit 600 by the QAOA corresponding to the combinatorial optimization problem.

(16-1) The information processing device 100 determines hyperparameters $(\gamma',\beta')$ by the CPU 301 and the QPU 307 so that the energy of the quantum state $|\Psi(\gamma, \beta)\rangle$ of the quantum circuit 600 is minimized. This enables the information processing device 100 to determine hyperparameters $(\gamma',\beta')$ so that the QAOA Ansatz 610 approximates the combinatorial optimization problem.

(16-1a) The information processing device 100, for example, applies a superposition state $|s\rangle$ to n quantum bits by the QPU 307. The superposition state $|s\rangle$ is defined by, for example, the above formula (1). (16-1b) The information processing device 100, for example, identifies a quantum state $|\psi(\gamma,\beta)\rangle$ by multiplying the n quantum bits by $U_c(\gamma_1)U_x(\beta_1)...U_c(\gamma_p)U_x(\beta_p)$ according to $p(\gamma_i,\beta_i)$, by the QPU 307. i=1, 2, ..., p.

(16-1c) The information processing device 100, for example, measures an energy $E(\gamma,\beta)=\langle\Psi(\gamma,\beta)|C(z)|\Psi(\gamma,\beta)\rangle$ by the QPU 307. The information processing device 100 determines hyperparameters $(\gamma',\beta')$ by the CPU 301 so that the measured energy $E(\gamma,\beta)$ is minimized. More specifically, the information processing device 100 sets an objective function that minimizes the energy $E(\gamma,\beta)$ by using the Grid method, the BFGS method, the quadratic approximation method, the Powell method, or Bayesian estimation, and calculates the hyperparameters $(\gamma',\beta')$.

(16-1d) The information processing device 100, for example, determines the hyperparameters $(\gamma',\beta')$ repeatedly by the CPU 301. For example, the information processing device 100 returns to the process of (16-1a) until the hyperparameters $(\gamma',\beta')$ are determined a predetermined number of times by the CPU 301.

When the information processing device 100 determines the hyperparameters $(\gamma',\beta')$ a predetermined number of times by the CPU 301, the hyperparameters $(\gamma',\beta')$ are statistically determined. The predetermined number of times is, for example, set in advance. The predetermined number of times is, for example, a third number. Here, a reason for approximating the QAOA Ansatz 610 to a combinatorial optimization problem is described.

A graph 1600 in Fig. 16 represents a MaxCut problem. The nodes of the graph 1600 correspond to quantum bits. Among the nodes of the graph 1600, the nodes with dotted hatching represent the range represented by a QAOA Ansatz 1610 with p=1. The QAOA Ansatz 1610 includes Hadamard gates 1611. The QAOA Ansatz 1610 includes, for example, gates 1612 and 1613.

Here, the energy is defined, for example, by the following formula (3). As depicted in the following formula (3), the other quantum bits other than the quantum bits with the subscripts j and k are cancelled by U in the following formula (4).

$$E = \langle \psi(\gamma, \beta) | C_Z | \psi(\gamma, \beta) \rangle = \sum_{\langle j,k \rangle \in Z} \langle s | e^{\gamma_1 H_{ZC}} e^{\beta_1 H_{xr}} C_{\langle j,k \rangle} e^{-\beta_1 H_{xr}} e^{-\gamma_1 H_{ZC}} | s \rangle$$

$$= \sum_{\langle j,k \rangle \in Z} \langle s | e^{\gamma_1 H_{ZC}} e^{\beta_1 \left( \sigma_x^j + \sigma_x^k \right)} C_{\langle j,k \rangle} e^{-\beta_1 \left( \sigma_x^j + \sigma_x^k \right)} e^{-\gamma_1 H_{ZC}} | s \rangle \quad \ldots (3)$$

$$U = e^{-\gamma_1 H_{ZC}} \quad \ldots (4)$$

Thus, there is a problem in that the QAOA Ansatz 1610 with p=1 cannot express the entire graph 1600. Similarly, a graph 1620 represents the MaxCut problem. The nodes of the graph 1620 correspond to quantum bits. Among the nodes of the graph 1620, the nodes with dotted hatching represent the range expressed by a QAOA Ansatz 1630 with p=2. The QAOA Ansatz 1630 includes Hadamard gates 1631. The QAOA Ansatz 1630 includes gates 1632, 1633, 1634, and 1635. Like the QAOA Ansatz 1610 with p=1, the QAOA Ansatz 1630 with p=2 has a problem of being unable to express the entire graph 1620.

For this reason, it is preferable for the information processing device 100 to determine the hyperparameters $(\gamma', \beta')$ so as to approximate an expression range 1641 of the QAOA Ansatz 610 to a combinatorial optimization problem 1640. For details on approximating the expression range 1641 of the QAOA Ansatz 610 to the combinatorial optimization problem 1640, reference can be made to Peruzzo, Alberto, et al. "A variational eigenvalue solver on a photonic quantum processor." Nature communications 5.1 (2014): 4213.

(16-2) The information processing device 100 calculates a state $z_0$ that is a solution to C(z) based on the Ising model and the initial value, by the Ising machine 306. The information processing device 100 calculates a state $z_0$ that is a solution to C(z) based on the Ising model and the initial value using the Ising machine 306 according to, for example, a digital annealer.

(16-3) The information processing device 100 determines hyperparameters $(\gamma^*, \beta^*)$, using the CPU 301 and the QPU 307. The information processing device 100 determines hyperparameters $(\gamma^*, \beta^*)$ from the hyperparameters $(\gamma', \beta')$ so that the probability that the quantum state $|\Psi(\gamma, \beta)\rangle$ of the quantum circuit 600 becomes $z_0$ is maximized.

(16-3a) For example, the information processing device 100 sets the hyperparameters $(\gamma', \beta')$ as the hyperparameters $(\gamma, \beta)$. (16-3b) For example, the information processing device 100 applies the superposition state $|s\rangle$ to n quantum bits by the QPU 307, similar to Figs. 7 and 8. Here, the superposition state $|s\rangle$ is defined by, for example, the above formula (1).

(16-3c) For example, the information processing device 100 prepares a second quantum circuit 700 by the QAE, similar to Figs. 7 and 8. For example, the information processing device 100 measures the probability $P_{z0}(\gamma, \beta) = \langle \Psi(\gamma, \beta) | z_0 \rangle \langle z_0 | \Psi(\gamma, \beta) \rangle$ according to the prepared second quantum circuit 700, as in Figs. 7 and 8.

(16-3d) The information processing device 100 determines the hyperparameters $(\gamma^*, \beta^*)$ by the CPU 301 so that the measured probability $p_{z0}(\gamma, \beta)$ is maximized. The information processing device 100 determines the hyperparameters $(\gamma^*, \beta^*)$ by setting an objective function that maximizes the probability $p_{z0}(\gamma, \beta)$ using, for example, the Grid method, the BFGS method, the quadratic approximation method, the Powell method, or Bayesian estimation and by calculating the hyperparameters $(\gamma^*, \beta^*)$.

The information processing device 100 repeatedly determines the hyperparameters $(\gamma^*, \beta^*)$ by the CPU 301, as described above. The information processing device 100 sets the most-recently calculated hyperparameters $(\gamma^*, \beta^*)$ as the hyperparameters $(\gamma, \beta)$ until the hyperparameters $(\gamma^*, \beta^*)$ are determined a predetermined number of times by the CPU 301, and returns to the process of (16-3b). When the information processing device 100 determines the hyperparameters $(\gamma^*, \beta^*)$ a predetermined number of times by the CPU 301, the hyperparameters $(\gamma^*, \beta^*)$ are statistically determined. The predetermined number of times is, for example, set in advance. The predetermined number of times is, for example, a fourth number.

(16-4) The information processing device 100 performs n-shot sampling of the quantum state $|\psi(\gamma^*, \beta^*)\rangle$ based on $(\gamma^*, \beta^*)$ according to the quantum circuit 600 by the CPU 301 and the QPU 307, and determines the optimal classical state $z_1^*$. The information processing device 100 applies the superposition state $|s\rangle$ to n quantum bits, for example, by the QPU 307. The information processing device 100 identifies the quantum state $|\psi(\gamma^*, \beta^*)\rangle$ by multiplying the n quantum bits by $U_c(\gamma_1)U_x(\beta_1)...U_c(\gamma_p)U_x(\beta_p)$ according to $(\gamma^*, \beta^*)$, for example, by the QPU 307.

The information processing device 100 performs n-shot sampling of the quantum state $|\psi(\gamma^*, \beta^*)\rangle$ by the QPU 307, for example, to determine n classical states $z_1$. For example, the information processing device 100 performs Z-direction projection measurement of the quantum state $|\psi(\gamma^*, \beta^*)\rangle$ represented by the quantum circuit 600 in which $(\gamma^*, \beta^*)$ is set, n times to obtain a state z, and determines n classical states $z_1$.

The information processing device 100 determines a classical state $z_1^*$ that is a tentative solution to the combinatorial optimization problem based on the n classical states $z_1$, by using the CPU 301. For example, the information processing device 100 determines whether $\min(E_1) < \min(E_0, E_1^*)$, by using the CPU 301. Here, for example, when $\min(E_1) < \min(E_0, E_1^*)$, the information processing device 100 determines $z_1^*$ to be $\text{argmin}(E_1)$, by using the CPU 301. On the other hand, when $\min(E_1) < \min(E_0, E_1^*)$ is not satisfied, for example, the information processing device 100 determines $z_1^*$ based on $E_1$ and the Hamming Distance, using the CPU 301.

(16-5) The information processing device 100 determines, using the CPU 301, whether a termination condition is satisfied. The termination condition is, for example, that a series of processes of (16-1), (16-2), (16-3), and (16-4) have been performed a predetermined number of times. The predetermined number of times is, for example, set in advance. The predetermined number of times is, for example, a fifth number. The termination condition may be specified by a threshold value for the energy E or the state z, for example.

When the termination condition is not satisfied, the information processing device 100 sets the currently determined optimal classical state $z_1^*$ as the initial value of the Ising machine 306 by the CPU 301, and executes the series of processes (16-1), (16-2), (16-3), and (16-4) again.

When the termination condition is satisfied, the information processing device 100 outputs $\min(C(z_0), C(z_1^*))$ and $\text{argmin}(C(z))$. $\text{argmin}(C(z))$ is, for example, $z_0$ or $z_1^*$. This enables the information processing device 100 to accurately calculate $\text{argmin}(C(z))$, which is the solution to the combinatorial optimization problem. The information processing device 100 can reduce the time required to calculate a solution to a combinatorial optimization problem.

The information processing device 100 can measure the probability $p_{z0}(\gamma,\beta)=<\psi(\gamma,B)|z_0><z_0|\gamma(\gamma,\beta)>$ by utilizing the QAE. Thus, the information processing device 100 can suppress measurement error to an order of $1/n^2$. Therefore, when suppressing the measurement error, the information processing device 100 can suppress an increase in the number of shots, can reduce the time required for measurement, and can reduce the time required for calculating a solution to a combinatorial optimization problem.

As in Fig. 9, the information processing device 100 can efficiently and accurately bring the solution of the combinatorial optimization problem closer to the optimal solution by the QAOA. For example, the information processing device 100 can consider all states represented by quantum states that can be a solution to the combinatorial optimization problem by the QAOA, and can accurately calculate the solution to the combinatorial optimization problem. Thus, the information processing device 100 can reduce the time required to calculate a solution to a combinatorial optimization problem by the QAOA.

Furthermore, the information processing device 100 can determine the hyperparameters $(\gamma',\beta')$ so that the expression range of the QAOA Ansatz 610 is approximated to the combinatorial optimization problem. Thus, even when the depth p of the QAOA Ansatz 610 is relatively small, the information processing device 100 can make the QAOA Ansatz 610 express the whole picture of the combinatorial optimization problem, and can make it easy to solve the combinatorial optimization problem with high accuracy.

While a case has been described where the information processing device 100 uses the QPU 307 to determine the hyperparameters $(\gamma^*,\beta^*)$ and determine the optimal classical state $z_1^*$, configuration is not limited hereto. For example, the information processing device 100 may have a quantum computer simulator. For example, the information processing device 100 uses a quantum computer simulator to determine hyperparameters $(\gamma^*,\beta^*)$ and determine the optimal classical state $z_1^*$.

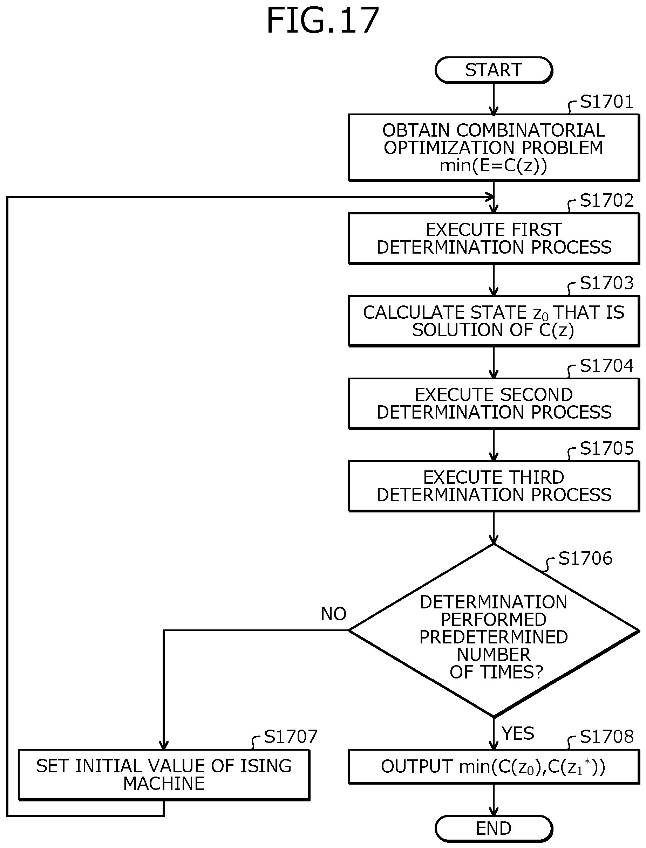

An example of a procedure of overall processing in the second example executed by the information processing device 100 is described with reference to Fig. 17. The overall processing is implemented by, for example, the CPU 301 depicted in Fig. 3, storage areas such as the memory 302 and the recording medium 305, the network I/F 303, the Ising machine 306, and the QPU 307.

Fig. 17 is a flowchart depicting an example of the procedure of the overall processing in the second example. In Fig. 17, the information processing device 100 obtains a combinatorial optimization problem $\min(E=C(z))$ by the CPU 301 (step S1701).

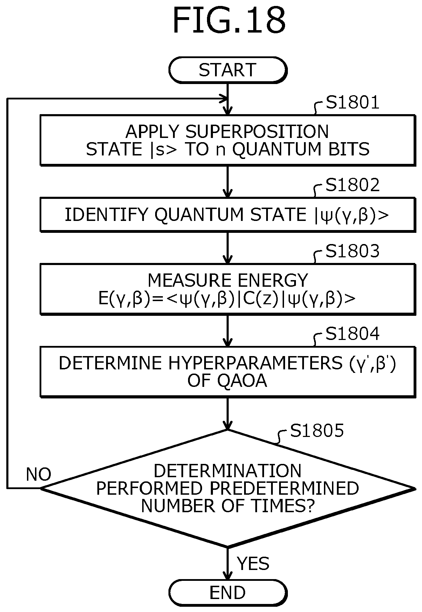

The information processing device 100 then executes, by the QPU 307, a first determination process, which is described later with reference to Fig. 18 (step S1702). The information processing device 100 executes the first determination process to determine the hyperparameters $(\gamma',\beta')$ of the QAOA so that the energy $E(\gamma,\beta)$ is minimized.

The information processing device 100 then calculates the state $z_0$ that is the solution of $C(z)$ based on the initial value by the Ising machine 306 (step S1703).

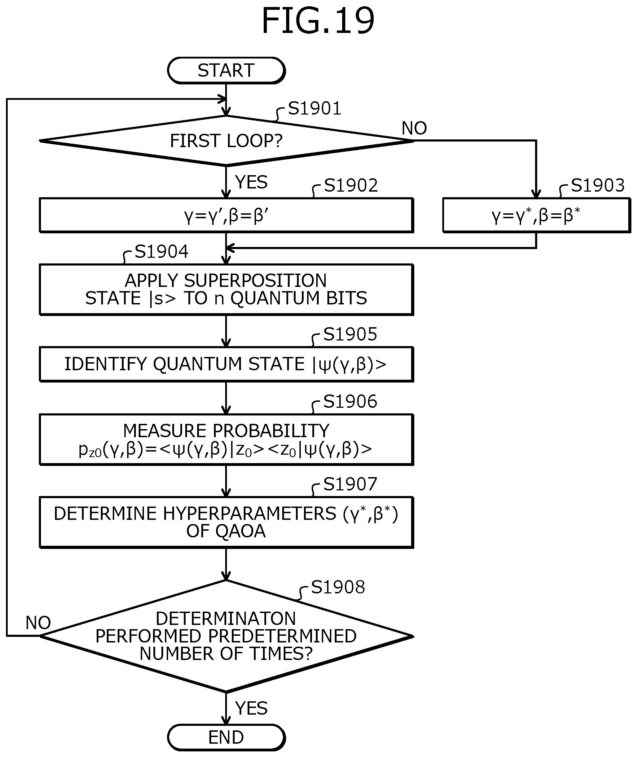

The information processing device 100 then executes the second determination process (described later with reference to Fig. 19) based on the hyperparameters $(\gamma',\beta')$ of the QAOA and the state $z_0$ that is the solution of $C(z)$ by the QPU 307 (step S1704). The information processing device 100 executes the second determination process to determine the hyperparameters $(\gamma^*,\beta^*)$ of the QAOA from the hyperparameters $(\gamma',\beta')$ of the QAOA so that the probability that the quantum state $|\Psi(\gamma,\beta)>$ becomes $z_0$ is maximized.

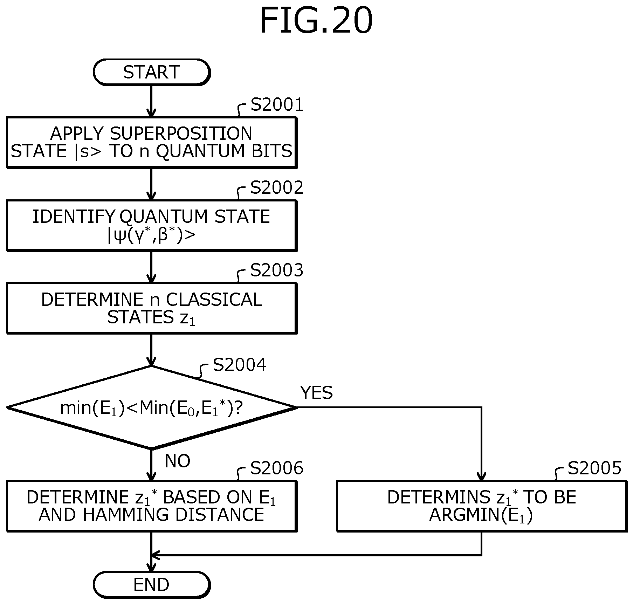

Then, the information processing apparatus 100 causes the QPU 307 to execute a third determination process, which is described later with reference to Fig. 20 (step S1705). The information processing device 100 performs n-shot sampling of the quantum state $|\Psi(\gamma^*,\beta^*)>$ by executing the third determination process, and determines the optimal

classical state $z_1{}^*$.

The information processing device 100 then judges whether the optimal classical state $z_1{}^*$ has been determined a predetermined number of times (step S1706). The predetermined number of times is set in advance by the user, for example. Here, when the determination has not been performed the predetermined number of times (step S1706: NO), the information processing device 100 proceeds to the process at step S1707. On the other hand, when the determination has been performed the predetermined number of times (step S1706: YES), the information processing device 100 proceeds to the process at step S1708.

At step S1707, the information processing device 100 sets the initial value of the Ising machine 306 to the optimal classical state $z_1{}^*$ (step S1707). Then, the information processing device 100 returns to the process at step S1702.

At step S1708, the information processing device 100 outputs $\min(C(z_0),C(z_1{}^*))$ (step S1708). Here, the information processing device 100 may output $\mathrm{argmin}(C(z))$. Then, the information processing device 100 ends the entire processing.

An example of a procedure of the first determination process in the second example executed by the information processing device 100 is described with reference to Fig. 18. The first determination process is implemented by, for example, the CPU 301, the storage area such as the memory 302 and the recording medium 305, the network I/F 303, and the QPU 307 depicted in Fig. 3.

Fig. 18 is a flowchart depicting an example of the procedure of the first determination process in the second example. In Fig. 18, the information processing device 100 applies a superposition state $|s>$ to n quantum bits (step S1801). The information processing device 100 then multiplies n quantum bits by $U_c(\gamma_1)U_x(\beta_1)...U_c(\gamma_p)U_x(\beta_p)$ for $p(\gamma_i,\beta_i)$ to identify the quantum state $|\Psi(\gamma,\beta)>$ (step S1802).

The information processing device 100 then measures the energy $E(\gamma,\beta)=<\Psi(\gamma,\beta)|C(z)|\Psi(\gamma,\beta)>$ (step S1803). Then, the information processing device 100 determines the hyperparameters $(\gamma',\beta')$ of the QAOA so that the energy $E(\gamma,\beta)$ is minimized (step S1804).

The information processing device 100 then judges whether the hyperparameters $(\gamma',\beta')$ of the QAOA have been determined a predetermined number of times (step S1805). The predetermined number of times is, for example, set in advance by the user. Here, when the determination has not been performed the predetermined number of times (step S1805: NO), the information processing device 100 returns to the process at step S1801. On the other hand, when the determination has been performed the predetermined number of times (step S1805: YES), the information processing device 100 ends the first determination process.

An example of a procedure of the second determination process in the second example executed by the information processing device 100 is described next with reference to Fig. 19. The second determination process is implemented, for example, by the CPU 301 depicted in Fig. 3, the storage area such as the memory 302 and the recording medium 305, the network I/F 303, and the QPU 307.

Fig. 19 is a flowchart depicting an example of the procedure of the second determination process in the second example. In Fig. 19, the information processing device 100 determines whether a current loop is the first loop (step S1901). Here, when the current loop is the first loop (step S1901: YES), the information processing device 100 sets $\gamma=\gamma'$ and $\beta=\beta'$ (step S1902) and proceeds to the process at step S1904. On the other hand, when the current loop is not the first loop (step S1901: NO), the information processing device 100 sets $\gamma=\gamma^*$ and $\beta=\beta^*$ (step S1903) and proceeds to the process at step S1904.

At step S1904, the information processing device 100 applies the superposition state $|s>$ to the n quantum bits (step S1904). The information processing device 100 then identifies the quantum state $|\Psi(\gamma,\beta)>$ by executing the measurement process depicted in Fig. 12 (step S1905). Next, the information processing device 100 measures the probability $p_{z0}(\gamma,\beta)=<\psi(\gamma,B)|z_0><z_0|\gamma(\gamma,\beta)>$ by executing the measurement process depicted in Fig. 12 (step S1906). Then, the information processing device 100 determines the hyperparameters $(\gamma^*,\beta^*)$ of the QAOA so that the probability $p_{z0}(\gamma,\beta)$ is maximized (step S1907).

The information processing device 100 then judges whether the hyperparameters $(\gamma^*,\beta^*)$ of the QAOA have been determined a predetermined number of times (step S1908). The predetermined number of times is set in advance by the user, for example. Here, when the determination has not been performed the predetermined number of times (step S1908: NO), the information processing device 100 returns to the process at step S1901. On the other hand, when the determination has been performed the predetermined number of times (step S1908: YES), the information processing device 100 ends the second determination process.

An example of a procedure of the third determination process in the second example executed by the information processing device 100 is described next with reference to Fig. 20. The third determination process is implemented by, for example, the CPU 301 depicted in Fig. 3, storage areas such as the memory 302 and recording medium 305, the network I/F 303, and the QPU 307.

Fig. 20 is a flowchart depicting an example of the procedure of the third determination process in the second example. In Fig. 20, the information processing device 100 applies a superposition state $|s>$ to n quantum bits (step S2001).

The information processing device 100 then multiplies n quantum bits by $U_c(\gamma_1)U_x(\beta_1)...Uc(\gamma_p)U_x(\beta_p)$ according to the most current $(\gamma^*,\beta^*)$ to identify the quantum state $|\psi(\gamma^*,\beta^*)>$ (step S2002). Then, the information processing device 100 performs n-shot sampling of the quantum state $|(\gamma^*,\beta'')>$ to determine n classical states $z_1$ (step S2003).

The information processing device 100 then calculates the energy $E_1$ corresponding to each classical state $z_1$, and judges whether $min(E_1)<min(E_0,E_1^*)$ (step S2004). $E_0$ is the energy corresponding to $z_0$. $E_1^*$ is the energy corresponding to $z_1^*$. Here, $z_1^*$ represents a classical state that is determined to be optimal at the current time point.

Here, when $min(E_1)<min(E_0,E_1^*)$ is satisfied (step S2004: YES), the information processing device 100 proceeds to the process at step S2005. On the other hand, when $min(E_1)<min(E_0,E_1^*)$ is not satisfied (step S2004: NO), the information processing device 100 proceeds to the process at step S2006.

At step S2005, the information processing device 100 determines $z_1^*$ to be $argmin(E_1)$ (step S2005). $argmin(E_1)$ represents any classical state $z_1$ that takes $min(E_1)$ among $E_1$ corresponding to the classical states $z_1$. Then, the information processing device 100 ends the third determination process.

At step S2006, the information processing device 100 determines $z_1^*$ based on $E_1$ and Hamming Distance (step S2006). $E_1$ and Hamming Distance are, for example, $((E_1-E_0)\times Hamming\ Distance\ (z_1,z_0))^{-1}$. Then, the information processing device 100 ends the third determination process.

Here, the information processing device 100 may switch the processes of some steps in each of the flowcharts in Figs. 17 to 20. For example, the processes at steps S1702 and S1703 can be switched. The information processing device 100 may omit the processes at some steps in each of the flowcharts in Figs. 17 to 20. For example, the processes at steps S1706 and S1707 can be omitted.

An example of application of the information processing device 100 is described next. The information processing device 100 can be applied, for example, to solving a combinatorial optimization problem for searching for a moving path of a moving object. The information processing device 100 can be applied, for example, to solving a combinatorial optimization problem for creating an employee work schedule. The information processing device 100 can be applied, for example, to solving a combinatorial optimization problem for creating a manufacturing plan for a product.

As set forth herein, the information processing device 100 can calculate a first solution to a combinatorial optimization problem based on an Ising model corresponding to the combinatorial optimization problem. The information processing device 100 can determine the parameter values of the quantum approximate optimization algorithm so that the probability that the quantum state of the first quantum circuit by the quantum approximate optimization algorithm for the combinatorial optimization problem becomes the calculated first solution, is maximized. The information processing device 100 can prepare, for example, a second quantum circuit by quantum amplitude estimation, which has an auxiliary quantum bit and includes a partial circuit in which the quantum state of the auxiliary quantum bit becomes 1 when the quantum state of the first quantum circuit becomes the first solution. According to the information processing device 100, for example, the second quantum circuit is used to repeatedly update the parameter value according to the result of measuring the probability based on the phase that defines the amplitude that identifies the probability, whereby the parameter value is determined. According to the information processing device 100, the second solution to the combinatorial optimization problem can be calculated based on the first quantum circuit in which the determined parameter value is set. This enables the information processing device 100 to reduce the time required to accurately calculate a solution to a combinatorial optimization problem.

According to the information processing device 100, with respect to the first quantum circuit, the first value of the parameter can be determined so that the energy corresponding to the quantum state of the first quantum circuit is minimized. According to the information processing device 100, the first solution can be calculated based on the Ising model. According to the information processing device 100, the second value of the parameter can be determined from the determined first value of the parameter so that the probability is maximized. According to the information processing device 100, for example, the second value of the parameter can be determined by repeating a process of updating the value of the parameter according to the result of measuring the probability based on the phase, using the second quantum circuit. According to the information processing device 100, the second solution can be calculated based on the first quantum circuit in which the determined second value of the parameter is set. This enables the information processing device 100 to reduce the time required to accurately calculate a solution to a combinatorial optimization problem. Furthermore, the information processing device 100 can improve the accuracy in calculating a solution to a combinatorial optimization problem.

According to the information processing device 100, a series of processes of calculating a first solution, determining a parameter value, and calculating a second solution can be repeatedly executed until a predetermined condition is satisfied. As a result, the information processing device 100 can improve the accuracy of calculating a solution to a combinatorial optimization problem.

According to the information processing device 100, a series of processes of calculating a first value of a parameter, calculating a first solution, determining a second value of a parameter, and calculating a second solution can be repeatedly executed until a predetermined condition is satisfied. As a result, the information processing device 100 can improve the accuracy of calculating a solution to a combinatorial optimization problem.

According to the information processing device 100, it is possible to adopt a predetermined condition in which the second solution is calculated a predetermined number of times. As a result, the information processing device 100 can repeatedly execute a series of processes an appropriate number of times, and can accurately calculate a solution to a combinatorial optimization problem.

According to the information processing device 100, the calculated second solution can be output. As a result, the information processing device 100 can make the second solution available externally as a solution to the combinatorial optimization problem.

According to the information processing device 100, the process of calculating the first solution can be executed by utilizing an Ising machine that solves the combinatorial optimization problem according to the digital annealer. According to the information processing device 100, the process of determining the parameter values and the process of calculating the second solution can be executed by utilizing a quantum computing device that processes a quantum circuit. As a result, the information processing device 100 can make the first solution efficiently calculable, and the second solution efficiently calculable.

According to the information processing device 100, the process of calculating the first solution can be executed by utilizing an Ising machine that solves the combinatorial optimization problem according to the digital annealer. According to the information processing device 100, the process of determining the first value of the parameter, the process of determining the second value of the parameter, and the process of calculating the second solution can be executed by utilizing a quantum computing device that processes a quantum circuit. As a result, the information processing device 100 can make the first solution efficiently calculable, and the second solution efficiently calculable.

The information processing method described in the present embodiment may be implemented by executing a prepared program on a computer such as a personal computer and a workstation. The program is stored on a non-transitory, computer-readable recording medium, read out from the computer-readable medium, and executed by the computer. The recording medium is, for example, a hard disk, a flexible disk, a compact disc read-only memory (CD-ROM), a magneto optical disc (MO), a digital versatile disc (DVD), or the like. The program may be distributed through a network such as the Internet.

According to one aspect, it is possible to facilitate solving combinatorial optimization problems.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

**Claims**

1. An information processing program for causing a computer to execute a process, the process comprising:

   calculating a first solution to a combinatorial optimization problem, based on an Ising model corresponding to the combinatorial optimization problem;
   determining a value of a parameter of a quantum approximate optimization algorithm for the combinatorial optimization problem, the value of the parameter being determined so as to maximize a probability that a quantum state of a first quantum circuit by the quantum approximate optimization algorithm becomes the calculated first solution; and
   calculating a second solution to the combinatorial optimization problem, based on the first quantum circuit in which the determined value of the parameter is set, wherein
   the determining includes determining the value of the parameter by repeating a process including using a second quantum circuit by quantum amplitude estimation and thereby updating the value of the parameter according to a result of measuring the probability based on a phase that defines an amplitude identifying the probability, the second quantum circuit including a partial circuit having an auxiliary quantum bit whose quantum state is 1 when the quantum state of the first quantum circuit becomes the first solution.

2. The information processing program according to claim 1, the process comprising:

   determining a first value of the parameter so that energy corresponding to the quantum state of the first quantum circuit is minimized for the first quantum circuit;
   calculating the first solution based on the Ising model;
   determining a second value of the parameter from the determined first value of the parameter so that the probability is maximized; and

calculating the second solution based on the first quantum circuit in which the determined second value of the parameter is set, wherein

the determining the second value includes determining the second value of the parameter by repeating the process including updating the value of the parameter according to the result of measuring the probability based on the phase, using the second quantum circuit.

3. The information processing program according to claim 1, the process comprising:

newly calculating the first solution, based on the Ising model in which the calculated second solution set as an initial value;

newly determining the value of the parameter so as to maximize the probability that the quantum state of the first quantum circuit becomes the newly calculated first solution; and

newly calculating the second solution, based on the first quantum circuit in which the newly determined value of the parameter is set, wherein

the newly calculating the first solution, the newly determining the value of the parameter, and the newly calculating the second solution are repeatedly executed until a predetermined condition is satisfied.

4. The information processing program according to claim 2, the process comprising:

newly determining the first value of the parameter, based on the calculated second solution so as to minimize energy corresponding to the quantum state of the first quantum circuit;

newly calculating the first solution, based on the Ising model in which the calculated second solution set as an initial value;

newly determining the second value of the parameter from the newly determined first value of the parameter so as to maximize the probability that the quantum state of the first quantum circuit becomes the newly calculated first solution; and

newly calculating the second solution, based on the first quantum circuit in which the newly determined second value of the parameter is set, wherein

the newly determining the first value of the parameter, the newly calculating the first solution, the newly determining the second value of the parameter, and the newly calculating the second solution being repeatedly executed until a predetermined condition is satisfied.

5. The information processing program according to claim 3 or 4, wherein the predetermined condition is calculating the second solution a predetermined number of times.

6. The information processing program according to any one of claims 1 to 5, the process further comprising outputting the calculated second solution.

7. The information processing program according to claim 1, wherein

the calculating the first solution is executed using an Ising machine that solves the combinatorial optimization problem according to a digital annealer, and

the determining the value of the parameter and the calculating the second solution are executed using a quantum computing device that processes a quantum circuit.

8. The information processing program according to claim 2, wherein

the calculating the first solution is executed using an Ising machine that solves the combinatorial optimization problem according to a digital annealer, and

the determining the first value of the parameter, the determining the second value of the parameter, and the calculating the second solution are executed using a quantum computing device that processes a quantum circuit.

9. The information processing program according to claim 1, wherein

the calculating the second solution to the combinatorial optimization problem includes calculating the second solution to the combinatorial optimization problem based on a distribution of the quantum state represented by the first quantum circuit.

10. The information processing program according to claim 1, wherein
the determining includes determining the value of the parameter by repeating the process of updating the value of the parameter according to the result of measuring the probability based on the distribution of the quantum state represented by the second quantum circuit.

11. An information processing method executed by a computer, the information processing method comprising:

calculating a first solution to a combinatorial optimization problem, based on an Ising model corresponding to the combinatorial optimization problem;
determining a value of a parameter of a quantum approximate optimization algorithm for the combinatorial optimization problem, the value of the parameter being determined so as to maximize a probability that a quantum state of a first quantum circuit by the quantum approximate optimization algorithm becomes the calculated first solution; and
calculating a second solution to the combinatorial optimization problem, based on the first quantum circuit in which the determined value of the parameter is set, wherein
the determining includes determining the value of the parameter by repeating a process including using a second quantum circuit by quantum amplitude estimation and thereby updating the value of the parameter according to a result of measuring the probability based on a phase that defines an amplitude identifying the probability, the second quantum circuit including a partial circuit having an auxiliary quantum bit whose quantum state is 1 when the quantum state of the first quantum circuit becomes the first solution.

12. An information processing device, comprising:

a memory (302); and
a processor (301) coupled to the memory, the processor configured to:

calculate a first solution to a combinatorial optimization problem, based on an Ising model corresponding to the combinatorial optimization problem;
determine a value of a parameter of a quantum approximate optimization algorithm for the combinatorial optimization problem, the value of the parameter being determined so as to maximize a probability that a quantum state of a first quantum circuit by the quantum approximate optimization algorithm becomes the calculated first solution; and
calculate a second solution to the combinatorial optimization problem, based on the first quantum circuit in which the determined value of the parameter is set, wherein
the processor determines the value of the parameter by repeating a process including using a second quantum circuit by quantum amplitude estimation and thereby updating the value of the parameter according to a result of measuring the probability based on a phase that defines an amplitude identifying the probability, the second quantum circuit including a partial circuit having an auxiliary quantum bit whose quantum state is 1 when the quantum state of the first quantum circuit becomes the first solution.

# FIG.1

COMBINATORIAL
OPTIMIZATION PROBLEM → [110 ISING MODEL] → [101 FIRST SOLUTION]

BY QAE
[112 SECOND QUANTUM CIRCUIT]

PROBABILITY THAT QUANTUM STATE
BECOMES FIRST SOLUTION IS MAXIMIZED

[120 PARAMETER] → [111 FIRST QUANTUM CIRCUIT] → [102 SECOND SOLUTION]

# FIG.2

# FIG.3

# FIG.4

100

400

STORAGE
UNIT

401
OBTAINING
UNIT

402
FIRST
CALCULATING
UNIT

403
DETERMINING
UNIT

404
SECOND
CALCULATING
UNIT

405
OUTPUT
UNIT

# FIG.5

100

COMBINATORIAL
OPTIMIZATION
PROBLEM

SOLUTION TO
COMBINATORIAL
OPTIMIZATION
PROBLEM

306

ISING
MACHINE

301

CPU

307

QPU

# FIG.6

600

610

QAOA ANSATZ

$|0\rangle$ — H 601

$|0\rangle$ — H 601

$|0\rangle$ — H 601

$|0\rangle$ — H 601

$e^{-i\gamma_1 H_{zc}}$ 611 $e^{-i\beta_1 H_{xr}}$ 612 $e^{-i\gamma_p H_{zc}}$ 613 $e^{-i\beta_p H_{xr}}$ 614

$|\psi(\gamma, \beta)\rangle$

# FIG.7

# FIG.8

# FIG.9A

900

PROBABILITY

$E_{min}$          E

# FIG.9B

910

PROBABILITY

$E_{min}$          E

# FIG.9C

920

PROBABILITY

$E_{min}$          E

# FIG.10

START

S1001

OBTAIN COMBINATORIAL
OPTIMIZATION PROBLEM
$\min(E=C(z))$

S1002

CALCULATE STATE $z_0$ THAT IS
SOLUTION TO $C(z)$

S1003

EXECUTE FIRST
DETERMINATION PROCESS

S1004

EXECUTE SECOND
DETERMINATION PROCESS

S1005

DETERMINA-
TION
PERFORMED
PREDETERMINED
NUMBER
OF TIMES?

NO

YES

S1006

SET INITIAL VALUE OF ISING
MACHINE

S1007

OUTPUT $\min(C(z_0),C(z_1^*))$

END

# FIG.11

```
        START
          │
          ▼                          ┌S1101
┌─────────────────────────────────┐
│      APPLY SUPERPOSITION         │
│  STATE |s> TO n QUANTUM BITS     │
└─────────────────────────────────┘
          │                          ┌S1102
          ▼
┌─────────────────────────────────┐
│ IDENTIFY QUANTUM STATE |ψ(γ,β)>  │
└─────────────────────────────────┘
          │                          ┌S1103
          ▼
┌─────────────────────────────────┐
│      MEASURE PROBABILITY         │
│ p_{z0}(γ,β)=<ψ(γ,β)|z_0><z_0|ψ(γ,β)> │
└─────────────────────────────────┘
          │                          ┌S1104
          ▼
┌─────────────────────────────────┐
│ DETERMINE HYPERPARAMETERS (γ*,β*)│
│           OF QAOA                │
└─────────────────────────────────┘
          │                          ┌S1105
          ▼
        ◇ DETERMINATION
  NO    PERFORMED PREDETERMINED
        NUMBER OF TIMES?
          │
          │ YES
          ▼
         END
```

Step S1101: APPLY SUPERPOSITION STATE $|s>$ TO n QUANTUM BITS

Step S1102: IDENTIFY QUANTUM STATE $|\psi(\gamma,\beta)>$

Step S1103: MEASURE PROBABILITY $p_{z0}(\gamma,\beta)=<\psi(\gamma,\beta)|z_0><z_0|\psi(\gamma,\beta)>$

Step S1104: DETERMINE HYPERPARAMETERS $(\gamma^*,\beta^*)$ OF QAOA

Step S1105: DETERMINATION PERFORMED PREDETERMINED NUMBER OF TIMES?

# FIG.12

START

S1201

SET STATE PREPARING CIRCUIT

S1202

SET QAE QUANTUM CIRCUIT INCLUDING
STATE PREPARING CIRCUIT

S1203

MEASURE PHASE θ BY PERFORMING
n-SHOT EXECUTION OF QAE QUANTUM
CIRCUIT

S1204

MEASURE PROBABILITY $p_{z0}(\gamma,\beta)=\sin\theta^2$

END

# FIG.13

```
            ( START )
                │
                ▼            ⌐ S1301
   ┌─────────────────────────────┐
   │    APPLY SUPERPOSITION       │
   │ STATE |s> TO n QUANTUM BITS  │
   └─────────────────────────────┘
                │            ⌐ S1302
                ▼
   ┌─────────────────────────────┐
   │   IDENTIFY QUANTUM STATE     │
   │        |ψ(γ*,β*)>            │
   └─────────────────────────────┘
                │            ⌐ S1303
                ▼
   ┌─────────────────────────────┐
   │     DETERMINE n CLASSICAL    │
   │         STATES z₁            │
   └─────────────────────────────┘
                │
                ▼                    ⌐ S1304
           ╱──────────────────────╲          YES
          ╱  min(E₁)<min(E₀,E₁*)?  ╲────────────────┐
          ╲                        ╱                 │
           ╲──────────────────────╱                  │
                │ NO                                  │
                ▼        ⌐ S1306                      ▼        ⌐ S1305
   ┌─────────────────────────────┐    ┌─────────────────────────────┐
   │ DETERMINE z₁* BASED ON E₁    │    │   DETERMINE z₁* TO BE        │
   │   AND HAMMING DISTANCE       │    │       ARGMIN(E₁)             │
   └─────────────────────────────┘    └─────────────────────────────┘
                │                                     │
                ▼◄────────────────────────────────────┘
            (  END  )
```

S1301 APPLY SUPERPOSITION STATE $|s>$ TO n QUANTUM BITS

S1302 IDENTIFY QUANTUM STATE $|\psi(\gamma^*,\beta^*)>$

S1303 DETERMINE n CLASSICAL STATES $z_1$

S1304 $\min(E_1)<\min(E_0,E_1^*)$?

S1305 DETERMINE $z_1^*$ TO BE ARGMIN($E_1$)

S1306 DETERMINE $z_1^*$ BASED ON $E_1$ AND HAMMING DISTANCE

# FIG.14

EP 4 682 779 A1

FIG.15

1500
STORAGE
UNIT

100

1501
OBTAINING
UNIT

1502
FIRST
DETERMINING
UNIT

1503
FIRST
CALCULATING
UNIT

1504
SECOND
DETERMINING
UNIT

1505
SECOND
CALCULATING
UNIT

1506
OUTPUT
UNIT

39

# FIG.16

1611 $|s\rangle$

$|0\rangle$ — H

$|0\rangle$ — H

1611

1612  1613

$e^{-i\gamma_1 H_{zc}}$  $e^{-i\beta_1 H_{xr}}$  $|\psi(\gamma, \beta)\rangle$

1610

1600

k  J

1631 $|s\rangle$

$|0\rangle$ — H

$|0\rangle$ — H

1631

1632  1633  1634  1635

$e^{-i\gamma_1 H_{zc}}$  $e^{-i\beta_1 H_{xr}}$  $e^{-i\gamma_p H_{zc}}$  $e^{-i\beta_p H_{xr}}$  $|\psi(\gamma, \beta)\rangle$

1630

1620

k  J

1640  1641

EXPRESSION RANGE OF QUANTUM CIRCUIT

COMBINATORIAL OPTIMIZATION PROBLEM

# FIG.17

START

OBTAIN COMBINATORIAL
OPTIMIZATION PROBLEM
$\min(E=C(z))$ ⌐S1701

EXECUTE FIRST
DETERMINATION PROCESS ⌐S1702

CALCULATE STATE $z_0$ THAT IS
SOLUTION OF $C(z)$ ⌐S1703

EXECUTE SECOND
DETERMINATION PROCESS ⌐S1704

EXECUTE THIRD
DETERMINATION PROCESS ⌐S1705

DETERMINATION
PERFORMED
PREDETERMINED
NUMBER
OF TIMES? ⌐S1706

NO

YES

SET INITIAL VALUE OF ISING
MACHINE ⌐S1707

OUTPUT $\min(C(z_0),C(z_1{}^*))$ ⌐S1708

END

# FIG.18

```
                    ┌──────────────┐
                    │    START     │
                    └──────┬───────┘
                           │              ⌐S1801
        ┌──────────────────▼──────────────────┐
        │         APPLY SUPERPOSITION          │
        │   STATE |s> TO n QUANTUM BITS        │
        └──────────────────┬──────────────────┘
                           │              ⌐S1802
        ┌──────────────────▼──────────────────┐
        │   IDENTIFY QUANTUM STATE |ψ(γ,β)>    │
        └──────────────────┬──────────────────┘
                           │              ⌐S1803
        ┌──────────────────▼──────────────────┐
        │            MEASURE ENERGY            │
        │  E(γ,β)=<ψ(γ,β)|C(z)|ψ(γ,β)>         │
        └──────────────────┬──────────────────┘
                           │              ⌐S1804
        ┌──────────────────▼──────────────────┐
        │  DETERMINE HYPERPARAMETERS (γ',β')   │
        │               OF QAOA                │
        └──────────────────┬──────────────────┘
                           │              ⌐S1805
```

S1801 — APPLY SUPERPOSITION STATE |s> TO n QUANTUM BITS

S1802 — IDENTIFY QUANTUM STATE $|\psi(\gamma,\beta)>$

S1803 — MEASURE ENERGY $E(\gamma,\beta)=<\psi(\gamma,\beta)|C(z)|\psi(\gamma,\beta)>$

S1804 — DETERMINE HYPERPARAMETERS $(\gamma',\beta')$ OF QAOA

S1805 — DETERMINATION PERFORMED PREDETERMINED NUMBER OF TIMES?

NO

YES

END

# FIG.19

START

S1901

FIRST LOOP? — NO

YES ┌S1902

$\gamma=\gamma',\beta=\beta'$

S1903

$\gamma=\gamma^{*},\beta=\beta^{*}$

S1904

APPLY SUPERPOSITION
STATE |s> TO n QUANTUM BITS

S1905

IDENTIFY QUANTUM STATE $|\psi(\gamma,\beta)>$

S1906

MEASURE PROBABILITY
$p_{z0}(\gamma,\beta)=<\psi(\gamma,\beta)|z_0><z_0|\psi(\gamma,\beta)>$

S1907

DETERMINE HYPERPARAMETERS $(\gamma^{*},\beta^{*})$
OF QAOA

S1908

DETERMINATON
PERFORMED PREDETERMINED
NUMBER OF TIMES?

NO

YES

END

# FIG.20

```
                    ┌─────────────┐
                    │    START    │
                    └─────────────┘
                           │
                           ▼           ┌ S2001
        ┌──────────────────────────────────────┐
        │       APPLY SUPERPOSITION            │
        │  STATE |s> TO n QUANTUM BITS         │
        └──────────────────────────────────────┘
                           │
                           ▼           ┌ S2002
        ┌──────────────────────────────────────┐
        │      IDENTIFY QUANTUM STATE          │
        │            |ψ(γ*,β*)>                │
        └──────────────────────────────────────┘
                           │
                           ▼           ┌ S2003
        ┌──────────────────────────────────────┐
        │       DETERMINE n CLASSICAL          │
        │            STATES z₁                 │
        └──────────────────────────────────────┘
                           │
                           ▼           ┌ S2004
```

$$\min(E_1) < \text{Min}(E_0, E_1^*)?$$

YES

NO

S2006

DETERMINE $z_1^*$ BASED ON $E_1$ AND HAMMING DISTANCE

S2005

DETERMINS $z_1^*$ TO BE ARGMIN($E_1$)

END

Europäisches
Patentamt

European
Patent Office

Office européen
des brevets

# EUROPEAN SEARCH REPORT

**Application Number**

EP 25 18 2509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Li Li ET AL: "Quantum optimization with a novel Gibbs objective function and ansatz architecture search", Physical Review Research, 7 April 2020 (2020-04-07), pages 1-12, XP093336161, DOI: 10.1103/PhysRevResearch.2.023074 Retrieved from the Internet: URL:https://arxiv.org/pdf/1909.07621 | 1-7, 10-12 | INV. G06N10/60 G06N10/20 G06N7/01 G06N5/01 |
| A | * abstract * * page 2, column 1, line 1 - page 6, column 1, line 26 * ----- | 8,9 | |

**TECHNICAL FIELDS SEARCHED (IPC)**

G06N

The present search report has been drawn up for all claims

| Place of search | Date of completion of the search | Examiner |
|---|---|---|
| The Hague | 24 November 2025 | Rousset, Antoine |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   .........................................................................

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021504805 W
- JP 2022542826 W
- US 20200090071
- US 20120020352

### Non-patent literature cited in the description

- **FARHI, EDWARD ; JEFFREY GOLDSTONE ; SAM GUTMANN**. A quantum approximate optimization algorithm. *arXiv preprint arXiv:1411.4028*, 2014
- **STREIF, MICHAEL ; MARTIN LEIB**. Forbidden subspaces for level-1 quantum approximate optimization algorithm and instantaneous quantum polynomial circuits. *Physical Review A*, 2020, vol. 102 (4), 042416
- **STREIF, MICHAEL ; MARTIN LEIB.** Training the quantum approximate optimization algorithm without access to a quantum processing unit. *Quantum Science and Technology*, 2020, vol. 5 (3), 034008
- Evaluating quantum approximate optimization algorithm: A case study. **SHAYDULIN, RUSLAN ; YURI ALEXEEV**. 2019 tenth international green and sustainable computing conference (IGSC).. IEEE, 2019
- **TIBALDI, SIMONE et al.** Bayesian Optimization for QAOA. *arXiv preprint arXiv:2209.03824*, 2022
- **KATZGRABER, HELMUT G. et al.** Seeking quantum speedup through spin glasses: The good, the bad, and the ugly. *Physical Review X*, 2015, vol. 5 (3), 031026
- **BRASSARD, GILLES et al.** Quantum amplitude amplification and estimation. *Contemporary Mathematics*, 2002, vol. 305, 53-74
- **KITAEV, A. YU.** Quantum measurements and the Abelian stabilizer problem. *arXiv preprint quant-ph/9511026*, 1995
- **SUZUKI, YOHICHI et al.** Amplitude estimation without phase estimation. *Quantum Information Processing*, 2020, vol. 19, 1-17
- **PERUZZO, ALBERTO et al.** A variational eigenvalue solver on a photonic quantum processor. *Nature communications*, 2014, vol. 5 (1), 4213